(19) Europäisches Patentamt
European Patent Office
Office européen des brevets

(11) EP 4 306 324 A1

(12) **EUROPEAN PATENT APPLICATION**
published in accordance with Art. 153(4) EPC

(43) Date of publication:
**17.01.2024 Bulletin 2024/03**

(21) Application number: **21937009.5**

(22) Date of filing: **16.04.2021**

(51) International Patent Classification (IPC):
***B41J 2/01*** *(2006.01)* ***C09D 11/54*** *(2014.01)*
***B41M 5/00*** *(2006.01)*

(52) Cooperative Patent Classification (CPC):
**B41J 2/01; B41M 5/00; C09D 11/54**

(86) International application number:
**PCT/JP2021/015742**

(87) International publication number:
**WO 2022/219815 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **KONICA MINOLTA, INC.**
**Tokyo 100-7015 (JP)**

(72) Inventors:
- **HAMAGAMI, Hiroki**
  **Tokyo 100-7015 (JP)**
- **KANEKO, Manabu**
  **Tokyo 100-7015 (JP)**
- **MAEDA, Akio**
  **Tokyo 100-7015 (JP)**
- **NIIZUMA, Naoto**
  **Tokyo 100-7015 (JP)**

(74) Representative: **Gille Hrabal Partnerschaftsgesellschaft mbB**
**Patentanwälte**
**Brucknerstraße 20**
**40593 Düsseldorf (DE)**

(54) **INK SET AND INKJET RECORDING METHOD**

(57) The ink set of the present invention is an ink set including a treatment liquid and an ink, wherein the treatment liquid contains at least a polyvalent metal salt, a polyether-modified silicone, a water-soluble solvent, and water, and the ink contains a colorant and resin fine particles having a glass transition temperature within the range of 40 to 90°C, a cloud point of the treatment liquid is in the range of 40 to 90°C, and a dynamic surface tension in the surface life of 15ms of the treatment liquid at 25°C is in the range of 25 to 35mN/m.

**FIG.1**

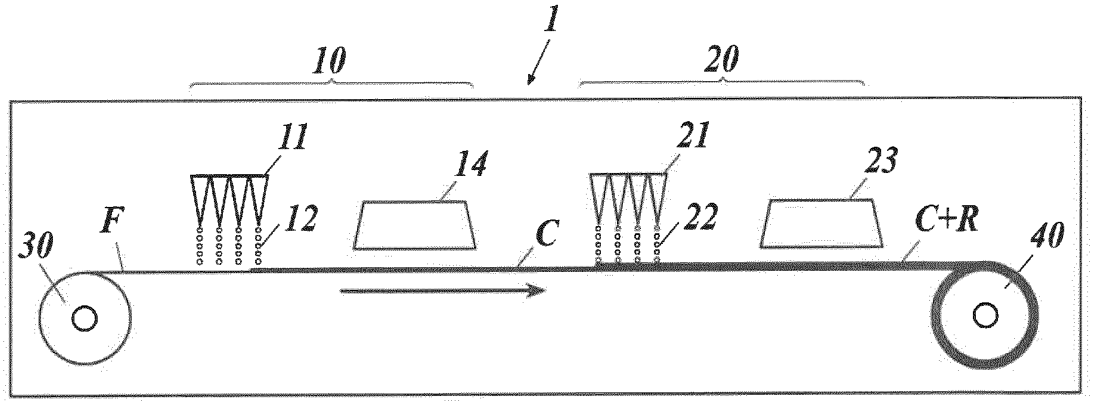


EP 4 306 324 A1

## Description

### Technical Field

The present invention relates to an ink set and an inkjet recording method, and more particularly, to an ink set and the like which have excellent adhesion to a non-absorbent base material, image abrasion resistance, and excellent storage stability.

### Background Art

Since an inkjet recording method can easily and inexpensively produce an image, it has been applied to various printing fields including photograph, various kinds of printing, and special printing such as marking and a color filter. In particular, since the inkjet recording method enables digital printing without using a plate, it is particularly suitable for applications where various images are formed in small quantities.

In such an inkjet recording method, a technique is known in which a treatment liquid (also referred to as a "pretreatment liquid" or a "primer") containing a flocculant such as an organic acid or a polyvalent metal salt is applied to a base material in advance, whereby pigments contained in the ink are aggregated to pinning by an organic acid or a polyvalent metal salt, thereby obtaining a high-quality image recorded matter.

On the other hand, there has been a problem that the abrasion resistance of the obtained image recorded matter is lowered by including the flocculant in the treatment liquid. For this reason, a technique for obtaining an image recorded matter having excellent image quality and abrasion resistance by reducing the amount of adhesion of the treatment liquid to less than the amount of adhesion of the ink has been disclosed (see, for example, Patent Document 1).

However, when an image is recorded by applying ink to a non-absorbent base material, good image quality cannot be obtained and adhesion to the non-absorbent base material is not sufficient only by the technique described in the Patent Document 1.

### Citation List

### Patent Literature

Patent Document 1: JP 2018-165029 A

### Summary of the Invention

### Problem to be solved by the Invention

The present invention has been made in view of the above-described problems and circumstances, and an object of the present invention is to provide an ink set which can obtain excellent adhesion to a non-absorbent base material and image abrasion resistance, and which is excellent in storage stability. Further, it is to provide an inkjet recording method using the ink set.

### Means for solving the Problem

In order to solve the above problems, the present inventors have found that, in the process of studying the causes and the like of the above problems, by setting the glass transition temperature of the resin fine particles contained in the ink to a specific range and defining the cloud point and the surface tension of the treatment liquid, an ink set and the like which have excellent adhesion to the non-absorbent base material, image abrasion resistance, and excellent in storage stability can be provided, and reached the present invention.

That is, the above problems according to the present invention are solved by the following means.

[1] An ink set comprising a treatment liquid and an ink, wherein

the treatment liquid contains at least a polyvalent metal salt, a polyether-modified silicone, a water-soluble solvent, and water,

the ink contains a colorant and resin fine particles having a glass transition temperature within the range of 40 to 90°C,

a cloud point of the treatment liquid is in the range of 40 to 90°C, and,

a dynamic surface tension in the surface life of 15ms of the treatment liquid at 25°C is in the range of 25 to 35mN/m.

[2] The ink set according to [1], wherein the ink contains the range of 3 to 15% by mass of the resin fine particles having an aggregation property of 0.2 or less with 0.15% by mass of a calcium acetate monohydrate aqueous solution.
[3] The ink set according to [1] or [2], wherein a dynamic surface tension in the surface life of 15ms of the ink at 25°C is 5mN/m or higher than a dynamic surface tension in the surface life of 15ms of the treatment liquid at 25°C.
[4] The ink set according to any one of [1] to [3], wherein the treatment liquid contains the range of 5 to 40% by mass of the water-soluble solvent having an SP value of 24 $(J/cm^3)^{1/2}$ or more.
[5] The ink set according to any one of [1] to [4], wherein the treatment liquid contains the range of 0.5 to 20% by mass of the polyvalent metal salt.
[6] The ink set according to any one of [1] to [5], wherein the treatment liquid contains the range of 0.1 to 2% by mass of the polyether-modified silicone.
[7] An inkjet recording method for recording an image using the ink set according to any one of [1] to [6], comprising the steps of:

applying the treatment liquid to a recording region of a non-absorbent base material;
applying the ink to the region to which the treatment liquid is applied, by an inkjet recording system; and
heating the region to which the ink is applied, at a heating temperature equal to or higher than the cloud point and equal to or higher than the glass transition temperature.

[8] The inkjet recording method according to [7], comprising a step of applying the ink to the region to which the treatment liquid is applied, by an inkjet recording system in a state where a drying rate of the treatment liquid is 30% or less.
[9] The inkjet recording method according to [7] or [8], wherein an applied amount of the resin fine particles to an applied amount of the polyether-modified silicone is 80 times or less per unit area.

Effect of the invention

According to the above means of the present invention, it is possible to provide an ink set having excellent adhesion to a non-absorbent base material, image abrasion resistance, and having excellent storage stability. Further, it is possible to provide an inkjet recording method using the ink set.

The expression mechanism or action mechanism of the effects of the present invention has not been clarified, but it is presumed as follows.

Since the ink contains a colorant and resin fine particles having a glass transition temperature of 40 to 90°C, excellent image abrasion resistance can be obtained by softening the resin fine particles and forming a uniform film in the ink drying step.

In addition, since the treatment liquid contains at least a polyvalent metal salt, a polyether-modified silicone, a water-soluble solvent, and water, and the cloud point of the treatment liquid is 40°C or more, sufficient storage stability of the treatment liquid is obtained, and since the cloud point is 90°C or less, the polyether-modified silicone contained in the treatment liquid acts as a plasticizer of the resin fine particles contained in the ink in the ink drying step, and excellent adhesion to the base material is obtained.

Further, since a dynamic surface tension in the surface life of 15ms of the treatment liquid at 25°C is in the range of 25 to 35mN/m, the treatment liquid tends to spread with wetting to the base material (for example, a non-absorbent base material), and the adhesion of the ink to the non-absorbent base material becomes good.

As described above, an ink set having good image abrasion resistance and good adhesion to a non-absorbent base material and excellent storage stability of the treatment liquid can be obtained.

Brief Description of the Drawings

[FIG. 1] This is a schematic diagram showing an example of a preferred recording apparatus in the present invention.
[FIG. 2] This is a cross-sectional view showing a schematic configuration of an image recorded matter according to the present invention.
[FIG. 3] This is a cross-sectional view of a packaging material for canned foods.
[FIG. 4] This is a schematic diagram of an inkjet head used in Example.

Mode for Carrying out the Invention

The ink set of the present invention includes a treatment liquid and an ink, wherein the treatment liquid contains

at least a polyvalent metal salt, a polyether-modified silicone, a water-soluble solvent, and water, and the ink contains a colorant and resin fine particles having a glass transition temperature within the range of 40 to 90°C, a cloud point of the treatment liquid is in the range of 40 to 90°C, and a dynamic surface tension in the surface life of 15ms of the treatment liquid at 25°C is in the range of 25 to 35mN/m.

This feature is the technical feature common to or corresponding to the following embodiments.

In an embodiment of the present invention, it is preferable that the ink contains the range of 3 to 15% by mass of the resin fine particles having an aggregation property of 0.2 or less with 0.15% by mass of a calcium acetate hydrate aqueous solution, from the viewpoint that excellent adhesion to a non-absorbent base material can be obtained by using the resin fine particles having a low aggregation property.

Further, it is preferable that a dynamic surface tension in the surface life of 15ms of the ink at 25°C is 5mN/m or higher than a dynamic surface tension in the surface life of 15ms of the treatment liquid at 25°C. By using the ink having a dynamic surface tension higher than that of the treatment liquid, bleeding of the ink can be prevented.

Further, it is preferable that the treatment liquid contains the range of 5 to 40% by mass of the water-soluble solvent having an SP value of 24 $(J/cm^3)^{1/2}$ or more, from the viewpoint of suppressing precipitation of the polyvalent metal salt and achieving excellent ejection stability.

Furthermore, it is preferable that the treatment liquid contains the range of 0.5 to 20% by mass of the polyvalent metal salt, from the viewpoint of preventing bleeding of the image. It is preferable that the polyvalent metal salt is 0.5% by mass or more in order to enhance the adhesion to the non-absorbent base material. On the other hand, it is preferable to set the polyvalent metal salt to 20% by mass or less in order to enhance the impact resistance of the image.

In addition, it is preferable that the treatment liquid contains the range of 0.1 to 2% by mass of the polyether-modified silicone, from the viewpoint of obtaining excellent adhesion to a non-absorbent base material, and it is also preferable from the viewpoint of solubility of the polyether-modified silicone.

The inkjet recording method of the present invention is an inkjet recording method for recording an image using the ink set of the present invention, includes the steps of applying the treatment liquid to a recording region of a non-absorbent base material, applying the ink to the region to which the treatment liquid is applied, by an inkjet recording system, and heating the region to which the ink is applied, at a heating temperature equal to or higher than the cloud point and equal to or higher than the glass transition temperature. Accordingly, it is possible to provide an inkjet recording method having good image abrasion resistance and good adhesion to a base material.

In addition, it is preferable to include a step of applying the ink to the region to which the treatment liquid is applied, by an inkjet recording system in a state in which the drying rate of the treatment liquid is 30% or less, from the viewpoint of obtaining adhesion to the non-absorbent base material.

Further, it is preferable that an applied amount of the resin fine particles to an applied amount of the polyether-modified silicone is 80 times or less per unit area, from the viewpoint of obtaining excellent adhesion to the non-absorbent base material.

Hereinafter, the present invention, its constituent elements, and embodiments and aspects for carrying out the present invention will be described. In the present application, "to" is used in the meaning that numerical values described before and after are included as a lower limit value and an upper limit value.

[Summary of Ink set of the present invention]

The ink set of the present invention is an ink set including a treatment liquid and an ink, wherein the treatment liquid contains at least a polyvalent metal salt, a polyether-modified silicone, a water-soluble solvent, and water, and the ink contains a colorant and resin fine particles having a glass transition temperature within the range of 40 to 90°C, a cloud point of the treatment liquid is in the range of 40 to 90°C, and a dynamic surface tension in the surface life of 15ms of the treatment liquid at 25°C is in the range of 25 to 35mN/m.

As used herein, the terms "treatment liquid" and "ink" refer to "treatment liquid (also referred to as "pretreatment liquid" or "primer") and "ink (also referred to as "water-based ink" or "water base ink")" using at least "water" as solvent. In both cases, 60% by mass or more of the solvent used is "water".

<Cloud point of Treatment liquid>

The treatment liquid included in the ink set of the present invention has a cloud point in the range of 40 to 90°C. Preferably, it is in the range of 50 to 90°C.

In the present invention, the "cloud point" of the treatment liquid refers to a temperature at which 2mL of the treatment liquid is placed in a glass container and heated, and the treatment liquid begins to become cloudy.

In order to make the cloud point of the treatment liquid within the above range, it can be controlled by, for example, types and contents of the water-soluble solvent, the polyvalent metal salt, and the surfactant contained in the treatment liquid.

Specifically, as the water-soluble solvent, it is preferable to use a water-soluble solvent having an SP value of 24 $(J/cm^3)^{1/2}$ or more as described later. As the polyvalent metal salt, it is preferable to use, for example, magnesium acetate or calcium acetate which will be described later, and as the surfactant, a polyether-modified silicone is used.

Further, as the content in the treatment liquid, the water-soluble solvent is preferably in the range of 5 to 40% by mass, the polyvalent metal salt is preferably in the range of 0.5 to 20% by mass, and the surfactant is preferably in the range of 0.1 to 2% by mass.

<Dynamic surface tension of Treatment liquid>

The dynamic surface tension in the surface life of 15ms of the treatment liquid at 25°C is in the range of 25 to 35mN/m.

In the present invention, the "dynamic surface tension" refers to a surface tension immediately after a liquid surface (gas-liquid interface) is formed and when the liquid surface is in a non-equilibrium state, and is a value measured at 25°C by a maximum bubble pressure method.

Further, the "surface life" refers to the elapsed time since the liquid surface is formed, that is, the life of bubbles generated in the maximum bubble pressure method, also referred to as bubble lifetime, and refers to the time from the time when a new interface is generated in the probe tip of the dynamic surface tensiometer to the time when the maximum bubble pressure is obtained.

The measuring method of the dynamic surface tension of the treatment liquid can be measured by using a dynamic surface tensiometer. Examples of the dynamic surface tensiometer include a bubble pressure dynamic surface tensiometer (manufactured by KRUSS Scientific, model "BP100"), and the like.

Unless otherwise noted, the dynamic surface tension herein is a dynamic surface tension measured at 25°C in the surface life of 15ms using the maximum bubble pressure method.

In order to make the dynamic surface tension of the treatment liquid within the above range, the type and content of the surfactant, the type and content of the water-soluble solvent, the type and content of the flocculant may be controlled. In particular, the polyether-modified silicone which is the surfactant contained in the treatment liquid is preferably in the range of 0.1 to 2% by mass. Among the polyether-modified silicones, trisiloxane is preferably contained, whereby the dynamic surface tension of the treatment liquid can be reduced to be within the above range. As the water-soluble solvent, a water-soluble solvent having an SP value of 24 $(J/cm^3)^{1/2}$ or more and a boiling point of 150°C to 250°C is preferably used, and the content thereof is preferably in the range of 5 to 40% by mass.

<Dynamic surface tension of Ink>

The dynamic surface tension in the surface life of 15ms of the ink at 25°C is preferably higher than the dynamic surface tension in the surface life 15ms of the treatment liquid at 25°C by 5mN/m or more.
The measuring method of the dynamic surface tension of the ink may be the same as the measuring method of the dynamic surface tension of the treatment liquid described above.

The dynamic surface tension in the surface life 15ms at 25°C is preferably in the range of 35 to 45mN/m.

In order to make the dynamic surface tension of the ink within the above range, the type and content of the water-soluble solvent, the type and content of the surfactant, the type and content of the pigment dispersant, and the type and content of the resin fine particles may be controlled.

Specifically, as the water-soluble solvent contained in the ink, a polyhydric alcohol is preferably used and the content thereof is preferably in the range of 10 to 60% by mass. As the surfactant, a nonionic surfactant or an anionic surfactant is preferably used, and the content thereof is preferably 0.1 to 2% by mass.

As the pigment dispersant, it is preferable to use various low-molecular-weight dispersant, nonionic polymer dispersant, anionic polymer dispersant, or appropriately use resin-coated pigment dispersions. Further, as the type of the resin fine particles, it is preferable to use resin fine particles such as polyester resin, acrylic resin, styrene acrylic resin, and urethane resin, and the content thereof is preferably in the range of 3 to 15 % by mass.

[Treatment liquid]

The treatment liquid according to the present invention can have functions of accelerating the image formation of the ink, improving the physical properties of the treatment liquid layer and the ink layer, and improving the image quality, by aggregating or thickening the ink when an image is recorded on a base material by an inkjet printing method.

The treatment liquid according to the present invention contains at least a polyvalent metal salt, a polyether-modified silicone, a water-soluble solvent, and water.

<Polyvalent metal salt>

The treatment liquid according to the present invention contains a material that produces an aggregate when it comes into contact with the ink, that is, a flocculant that is a polyvalent metal salt, so that the interaction with the ink is increased and the dots of the ink can be further fixed.

The polyvalent metal salt may aggregate an anionic component (usually a coloring material, a pigment, or the like) in an ink to be described later by salting-out.

As the polyvalent metal salt, a salt of a metal having a valence of 2 or more can be used. The type of the metal (cation) constituting the polyvalent metal salt is not particularly limited, and examples thereof include a divalent metal ion such as $Ca^{2+}$, $Cu^{2+}$, $Ni^{2+}$, $Mg^{2+}$, $Zn^{2+}$, and $Ba^{2+}$, a trivalent metal ion such as $Al^{3+}$, $Fe^{3+}$, $Cr^{3+}$, and $Y^{3+}$, and a tetravalent metal ion such as $Zr^{4+}$.

The type of the salt constituting the polyvalent metal salt is not particularly limited, and for example, known salts such as carbonate, sulfate, nitrate, hydrochloride, organic acid, borate, and phosphate can be used. Specific examples of particularly preferred polyvalent metal salts include calcium or magnesium salts of carboxylic acids such as calcium chloride, magnesium chloride, calcium nitrate, magnesium nitrate, magnesium acetate, calcium acetate, magnesium lactate, and calcium pantothenate.

<Organic acid>

The treatment liquid according to the present invention may further contain an organic acid as a flocculant in addition to the polyvalent metal salt. The organic acid can aggregate the anionic components in the ink due to a pH change. As the organic acid, a monovalent carboxylic acid is preferable from the viewpoint of not weakening the aggregation force of the polyvalent metal salt.

The organic acid can aggregate a pigment that may be contained in the ink described later.
Examples of the organic acid include formic acid, acetic acid, propionic acid, and benzoic acid.

The organic acid is preferably one which is not completely neutralized with a base. Neutralization with a base means that the acidic groups of these acids form ionic bond with other positively charged elements or compounds (e.g., inorganic compounds such as metals). In addition, the term "not completely neutralized" means that an acidic group that does not form the ionic bond among the acidic groups of the organic acid is present.

In addition, by using an organic acid, the storage stability of the treatment liquid is easily maintained, and blocking is unlikely to occur after the treatment liquid is applied and dried. Preferred organic acids in view of the above include formic acid, acetic acid, propionic acid, benzoic acid, and the like.

<Inorganic acid>

In the treatment liquid according to the present invention, in addition to the polyvalent metal salt, an inorganic acid may be further added as a flocculant. The inorganic acid can aggregate the anionic components in the ink due to a pH change.

The inorganic acid can aggregate a pigment that may be contained in an ink described later.
Examples of the inorganic acid include hydrochloric acid, nitric acid, sulfuric acid, and sulfamic acid.

The content of the polyvalent metal salt is preferably in the range of 0.5 to 20% by mass, and more preferably in the range of 1 to 10% by mass, based on 100% by mass of the total mass of the treatment liquid. As a result, anionic components in the ink can be effectively aggregated, which is preferable from the viewpoint of image quality and image abrasion resistance.

When the organic acid is contained, the content of the organic acid is preferably in the range of 0.1 to 10% by mass, and more preferably in the range of 1 to 3% by mass, based on 100% by mass of the total mass of the treatment liquid.

When the inorganic acid is contained, the content of the inorganic acid is preferably in the range of 0.1 to 10% by mass, and more preferably in the range of 1 to 3% by mass, based on 100% by mass of the total mass of the treatment liquid.

The content of the polyvalent metal salt or the organic acid in the aqueous solution can be measured by a known method. For example, the content can be measured by ICP emission spectrometry in the case of the polyvalent metal salt and by high performance liquid chromatography (HPLC) in the case of the organic acid.

When an organic acid is used, the applied amount of the organic acid is preferably an amount that adjusts pH of the treatment liquid to be equal to or less than the neutralization equivalent amount of the anionic components contained in the ink. In addition, when the anion component is a compound having a carboxy group, the first dissociation constant of the organic acid is preferably 3.5 or less from the viewpoint of making bleeding of the image less likely to occur.

<Polyether-Modified Silicone>

The polyether-modified silicone contained in the treatment liquid according to the present invention functions as a surfactant, and can improve the ejection stability of the treatment liquid from nozzle and control the spread of droplets (expanding of the dot-diameter) landed on a recording medium. Examples of the polyether-modified silicone include a siloxane having an alkylene oxide group at a side chain and/or at both ends of a polydimethylsiloxane chain.

Specific examples thereof include BYK-331, BYK-333, BYK-345, BYK-3450, BYK-3451, BYK-3455, BYK-346, BYK-347, BYK-348, and BYK-349 manufactured by BYK-Chemie Co., Ltd., TEGOWetKL245, TEGOWet250, TEGOWet260, TEGOWet270, and TEGOWet280 manufactured by Evonik Japan Co., Ltd., and KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, and X-22-4515 manufactured by Shin-Etsu Chemical Co., Ltd.

As the polyether-modified silicone, in particular, a trisiloxane having an alkylene oxide group at a side chain and/or at both ends of the polydimethylsiloxane chain is preferred. By using the trisiloxane, the dynamic surface tension of the treatment liquid can be effectively reduced, and an image with good adhesion to the non-absorbent base material can be obtained.

The trisiloxane preferably has a structure represented by the general formula (1) below.

[Chemical formula 1]

General Formula (1)

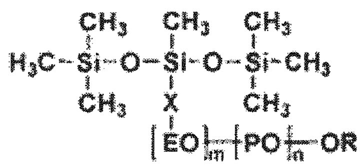

In the general formula (1), "EO" represents a repeating unit structure of polyethylene oxide, that is, a structure in which ethylene oxide, which is a three-membered cyclic ether, is ring-opened. In addition, "PO" represents a repeating unit structure of polypropylene oxide, that is, a structure in which propylene oxide, which is a three-membered cyclic ether, is ring-opened. Here, "[EO]m and [PO]n can be in any order" means that the order of the bonding positions to the siloxane skeleton serving as the parent compound in the compound molecule represented by the general formula (1) may be changed as appropriate.

In the general formula (1), X is preferably an alkylene group having 3 carbon atoms (i.e., a propylene group).

In the general formula (1), m is preferably an integer of 5 to 20, and n is preferably an integer of 0 to 6.

Specific examples of the silicone-based surfactant having the structure represented by the general formula (1) are shown below as S-1 to S-8, but the present invention is not limited thereto.

(S-1): In the general formula (1), R=methyl group, X=alkylene group having 3 carbon atoms, m=9, and n=0
(S-2): In the general formula (1), R=butyl group, X=alkylene group having 3 carbon atoms, m=25, and n=6
(S-3): In the general formula (1), R=hydrogen atom, X=alkylene group having 3 carbon atoms, m=3, and n=0
(S-4): In the general formula (1), R=hydrogen atom, X=alkylene group having 3 carbon atoms, m=33, and n=0
(S-5): In the general formula (1), R=hydrogen atom, X=alkylene group having 3 carbon atoms, m=22, and n=16
(S-6): In the general formula (1), R=hydrogen atom, X=alkylene group having 3 carbon atoms, m=9, and n=0
(S-7): In the general formula (1), R=hydrogen atom, X=alkylene group having 3 carbon atoms, m=12, and n=3
(S-8): In the general formula (1), R=hydrogen atom, X=alkylene group having 3 carbon atoms, m=1, and n=0

Examples of the trisiloxane include BYK-3450 and BYK-3451 manufactured by BYK-Chemie Japan Co., Ltd., and TEGOWET-KL245, TEGOWET-250, and TEGOWET-260 manufactured by Evonik Japan Co., Ltd.

The content of the polyether-modified silicone is preferably in the range of 0.1 to 2% by mass, and more preferably in the range of 0.5 to 1.5% by mass, based on 100% by mass of the total mass of the treatment liquid.

The treatment liquid may contain a known surfactant in addition to the polyether-modified silicone. The known surfactant includes anionic surfactants such as fluorine-based surfactant, which have a high ability to reduce static surface tension, and dioctyl sulfosuccinate, which has a high ability to reduce dynamic surface tension, polyoxyethylene alkyl ethers and polyoxyethylene alkyl phenyl ethers having relatively low molecular weights, acetylene glycols, Pluronic type surfactant (Pluronic is a registered trademark), and nonionic surfactant such as sorbitan derivatives.

<Water>

The water contained in the treatment liquid according to the present invention is not particularly limited, and may be ion-exchanged water, distilled water, or pure water.

<Water-soluble solvent>

Examples of the water-soluble solvent contained in the treatment liquid according to the present invention include alcohols, polyhydric alcohols, amines, amides, glycol ethers, and 1,2-alkanediols having 4 or more carbon atoms. In particular, a water-soluble solvent having an SP value of 24 $(J/cm^3)^{1/2}$ or more is preferably used.

The use of a water-soluble solvent having an SP value of 24 $(J/cm^3)^{1/2}$ or more reduces the cloud point of the treatment liquid. Thus, it is possible to heat to the cloud point of the treatment liquid or higher in the ink drying step, and an image having good adhesion to the non-absorbent base material can be obtained.

In the present invention, the SP value is referred to as Solubility Parameter. The SP value in the present invention is a value calculated by Fedors method. It is determined from the heat of molar vaporization of the water-soluble solvent and the molar volume of the water-soluble solvent at 25°C. As the unit of the SP value, cal is generally used. However, when converting to the SI unit system, the relation of $(cal/cm^3)^{1/2}=2.046\times10^3(J/m^3)^{1/2}$ may be used. In the following description, the unit of the SP value may be omitted, but the SP value is a value expressed in the unit of $(J/cm^3)^{1/2}$.

Examples of the water-soluble solvent having the SP value of 24 $(J/cm^3)^{1/2}$ or more include monohydric alcohols having 1 to 4 carbon atoms, polyhydric alcohols having 2 to 8 carbon atoms, polyalkylene glycols, and monoalkylpolyalkylene glycols.

Examples of monohydric alcohols having 1 to 4 carbon atoms include methanol (SP value: 28.2), ethanol (SP value: 25.7), and 1-propanol (SP value: 24.2).

Examples of polyhydric alcohols having 2 to 8 carbon atoms include ethylene glycol (SP value: 30.3), propylene glycol (SP value: 28.0), 1,3-propanediol (SP value: 32.9), 1,2-butanediol (SP value: 26.1), 1,3-butanediol (SP value: 30.3), 1,4-butanediol (SP value: 30.7), 2,3-butanediol (SP value: 29.9), 2-methyl-1,3-propanediol (SP value: 30.3), 1,2-pentanediol (SP value: 25.0), 1,5-pentanediol (SP value: 29.0), 1,2-hexanediol (SP value: 24.1), 1,6-hexanediol (SP value: 27.7), 3-methyl-1,5-pentanediol (SP value: 27.4), 2-methylpentane-2,4-diol (SP value: 26.8), glycerin (SP value: 33.5), and trimethylolpropane (SP value: 32.5).

Examples of the polyalkylene glycols include diethylene glycol (SP value: 30.6), triethylene glycol (SP value: 27.8), tetraethylene glycol (SP value: 26.1), and dipropylene glycol (SP value: 27.2).

Examples of the monoalkyl polyalkylene glycols include ethylene glycol monomethyl ether (SP value: 24.5) and the like.

The treatment liquid may contain one or two or more kinds selected from these water-soluble solvents.

The total content of the water-soluble solvent is preferably in the range of 5 to 40% by mass, and more preferably in the range of 10 to 40% by mass, based on 100% by mass of the total mass of the treatment liquid.

The treatment liquid can be appropriately contained other components such as a crosslinking agent, an antifungal agent, and a bactericide as long as the effect of the present invention is not impaired.

Further, for example, known various additives such as the ultraviolet absorber described in JP S57-74193A, JP S57-87988A, and JP S62-261476A, the color fading inhibitor described in JP S57-74192A, JP S57-87989A, JP S60-72785A, JP S61-146591A, JP H01-95091A, and JP H03-13376A, various surfactants such as anionic, cationic, or nonionic, the fluorescent brightening agent described in JP S59-42993A, JP S59-52689A, JP S62-280069A, JP S61-242871A, and JP H04-219266A, a defoamer, a lubricant such as diethylene glycol, a preservative, a thickener, and an antistatic agent and the like may be included.

It is preferable to prepare a treatment liquid layer by applying the treatment liquid according to the present invention directly onto a base material as a coating liquid and drying. Here, the additive preferably used in the treatment liquid is preferably sufficiently dissolved and then used as a coating liquid.

As a coating method of the treatment liquid, an inkjet method, a roll coating method, a rod bar coating method, an air knife coating method, a spray coating method, a curtain coating method, or an extrusion coating method using a hopper described in U.S. Pat. No. 2681294 is preferably used, and an inkjet method is particularly preferable.

[Ink]

The ink according to the present invention contains at least a colorant and resin fine particles having a glass transition temperature within the range of 40 to 90°C. In addition, it is preferable to contain water and a water-soluble solvent.

<Colorant>

The colorant contained in the ink according to the present invention is preferably a pigment.

As the pigment, it is preferable to use an anionic dispersed pigment, for example, a self-dispersible pigment having an anionic group on its surface, a pigment dispersed by an anionic polymer dispersant, or a pigment dispersed by coating a surface with an anionic resin. In particular, it is preferable to use a pigment dispersed by an anionic polymer dispersant from the viewpoint of excellent dispersibility and appropriately reacting with a treatment liquid to pinning.

As the pigment, conventionally known pigments can be used without any particular limitation, and for example, an insoluble pigment, an organic pigment such as a lake pigment, and an inorganic pigment such as titanium oxide can be preferably used.

In titanium oxide, which is generally difficult to ensure the ink ejection stability and adhesion, the present invention makes it particularly preferable to prevent bleeding and improve adhesion.

Titanium oxide has three crystal forms of anatase type, rutile type, and blue-kite type, and they are roughly classified into anatase type and rutile type for the general-purpose type. Although not particularly limited, a rutile type having a high refractive index and high concealability is preferable. Specific examples thereof include TR series of Fuji Titanium Industry Co., Ltd., JR series of Tayca Co., Ltd., and TIPAQUE of Ishihara Sangyo Kaisha, Ltd.

Although the insoluble pigment is not particularly limited, for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

Specific examples of the organic pigment that can be preferably used include the following pigments.

Examples of the pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, and C.I. Pigment Violet 19.

Examples of the pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and C.I. Pigment Yellow 155. C.I. Pigment Yellow 155 is particularly preferable in terms of the balance between color tone and light fastness.

Examples of the pigment for green or cyan include C.I. Pigment Blue 15, C.I. Pigment Blue 15:2, C.I. Pigment Blue 15:3, C.I. Pigment Blue 16, C.I. Pigment Blue 60, and C.I. Pigment Green 7.

Examples of the pigment for black include C.I. pigment black 1, C.I. pigment black 6, and C.I. pigment black 7.

<Pigment dispersant>

It is preferable that the treatment liquid according to the present invention contains a pigment dispersant for dispersing the pigment.

The pigment dispersant is preferably, but not limited to, a polymer dispersant having an anionic group, and preferably has a molecular weight within the range of 5000 to 200000.

Examples of the polymer dispersant include block copolymers having a structure derived from two or more kinds of monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives, random copolymers and salts thereof, polyoxyalkylene, and polyoxyalkylene alkyl ethers.

The polymer dispersant preferably has an acryloyl group, and is preferably added by neutralizing with a neutralizing base. Here, the neutralizing base is not particularly limited, but is preferably an organic base such as ammonia, monoethanolamine, diethanolamine, triethanolamine, or morpholine. In particular, when the pigment is titanium oxide, the titanium oxide is preferably dispersed by a polymer dispersant having an acryloyl group.

The added amount of the polymer dispersant is preferably in the range of 10 to 100% by mass, and more preferably in the range of 10 to 40% by mass with respect to the pigment.

It is particularly preferable that the pigment has a form of so-called encapsulated pigment in which the pigment is coated with the above polymer dispersant. As the coating method of the pigment with a polymer dispersant, various known methods can be used, and for example, a phase inversion emulsification method, an acid precipitation method, or a method of dispersing the pigment with a polymerizable surfactant, supplying a monomer thereto, and coating the pigment while polymerizing, are preferably exemplified.

A particularly preferred method is a method of dissolving a water-insoluble resin in an organic solvent such as methyl ethyl ketone, partially or completely neutralizing an acid group in the resin with a base, adding a pigment and ion-exchanged water disperse, removing the organic solvent, and adding water as necessary to prepare.

The average particle size of the pigment dispersed in the ink is preferably 50nm or more and less than 200nm. As a result, the dispersion stability of the pigment can be improved, and the storage stability of the ink can be improved. The particle size of the pigment can be measured by a commercially available particle size measuring instrument using a dynamic light scattering method, an electrophoresis method, or the like, but the measurement by a dynamic light scattering method is easy, and the particle size area can be measured accurately.

The pigment can be used by being dispersed using a disperser together with a dispersant and other additives required depending on the desired purpose.

As the disperser, a conventionally known ball mill, a sand mill, a line mill, a high-pressure homogenizer, and the like can be used. Among them, it is preferable to disperse the pigment by a sand mill because the particle size distribution becomes sharp. The material of the beads used for the sand mill dispersion is not particularly limited, but is preferably zirconia or zircon from the viewpoint of preventing generation of bead fragments and contamination of ion components. Furthermore, the bead diameter is preferably in the range of 0.3 to 3mm.

The content of the pigment in the ink is not particularly limited, but the titanium oxide is preferably in the range of 7 to 18% by mass, and the organic pigment is preferably in the range of 0.5 to 7% by mass.

<Resin fine particles>

The resin fine particles (hereinafter, also simply referred to as "resin") contained in the ink according to the present invention are resin fine particles having a glass transition temperature within the range of 40 to 90°C, and are preferably water-insoluble resin fine particles.

The glass transition temperature (glass transition point (Tg)) can be specified by reading the glass transition temperature Tg from an endothermic peak when the temperature is increased in a temperature range of -30 to 200°C at a temperature increase rate of 10°C/min using a DSC (differential scanning calorimeter).

The water-insoluble resin fine particle used in the present invention is a water-insoluble resin that can receive an ink and exhibits solubility or affinity for the ink.

The water-insoluble resin fine particles are water-insoluble in nature, but have a form in which a resin is dispersed in an aqueous medium as micro fine particles, and are non-water soluble resin which is forcibly emulsified by using an emulsifier or the like and dispersed in water, or non-water soluble resin which can be self-emulsified by introducing a hydrophilic functional group into a molecule to form a stable water dispersion by itself without using an emulsifier or a dispersion stabilizer. These resins are usually used in emulsified and dispersed form in water or water/alcohol mixed solvent.

In the present invention, the term "water-insoluble" refers to a resin having a dissolution amount of 10g or less, preferably 5g or less, more preferably 1g or less when the resin is dried at 105°C for 2 hours and then dissolved in 100g of water at 25°C. However, when the resin has a salt-forming group, the dissolution amount is the amount dissolved when the salt-forming group of the resin is neutralized by 100% with acetic acid or sodium hydroxide, depending on the type thereof.

The resin having the glass transition temperature within the range of 40 to 90°C is preferably any one of acrylic resin, urethane resin, polyester resin or a composite resin of urethane resin and acrylic resin, particularly acrylic resin, urethane resin, polyester resin or a composite resin of urethane resin and acrylic resin, and it is preferable that the average particle size of the resin fine particles of these resins is 200nm or less. In particular, the average particle size is preferably in the range of 100 to 150nm.

The polyester resin, the urethane resin, the acrylic resin, or the composite resin fine particles of the urethane resin and the acrylic resin described above are preferably anionic or nonionic.

Among them, the resin fine particles used in the ink preferably contain an acid structure, and can be dispersed in water even if the added amount of the surfactant is small, so that the water resistance of the ink layer is improved. This is called a self-emulsifying type, which means that the urethane-based resin can be dispersed and stabilized in water only by molecular ionic properties without using a surfactant. Examples of the acid structure include an acid group such as a carboxy group (-COOH), a sulfonic acid group ($-SO_3H$), and the like. The acid structure may be present in a side chain or ends in the resin.

Some or all of the above acid structures are preferably neutralized. By neutralizing the acid structure, the water dispersibility of the resin can be improved. Example of the neutralizing agent for neutralizing the acid structure is preferably organic amines, and it is preferable to use organic amines such as trimethylamine, triethylamine, tripropylamine, tributylamine, N-methyldiethanolamine, triethanolamine, and the like.

The ink according to the present invention preferably contains the range of 3 to 15% by mass of resin fine particles having an aggregation property of 0.2 or less with 0.15% by mass of a calcium acetate monohydrate aqueous solution. By using the resin fine particles having low aggregation property as described above, high ejection stability can be obtained while securing high wettability to the base material, and the image quality is higher and the adhesion to the base material is excellent.

In the present invention, the "aggregation property" is a value calculated by the following formula after the remaining amount is measured by the following procedure.

(i) Mix 5g of a resin fine particle aqueous solution (solid content: 10% by mass) containing resin fine particles and 5g of 0.3% by mass of calcium acetate monohydrate aqueous solution.
(ii) Centrifuge the mixtute.
(iii) Collect about 2g of the supernatant separated by centrifugation.
(iv) Measure the mass of the solid content (remaining amount (g)) after heating and drying the collected supernatant of about 2g at 150°C for 30 minutes.
(v) Calculate the value of aggregation property by the following formula.

$$\text{Formula: Aggregation property} = 1 - (\text{mass of solid content (g)}/\text{mass of collected supernatant (g)} \times 5\%)$$

Examples of the resin fine particles having the aggregation property of 0.2 or less include VYLONAL MD2000 manufactured by Toyobo Co., Ltd., Mowinyl 6969D manufactured by Japan Coating Resin Co., Ltd., and EVAFANOL HA-560 manufactured by Nicca Chemical Co., Ltd.
Hereinafter, each resin will be described.

(Polyester resin)

The polyester resin having a polyester skeleton as water-insoluble resin fine particles can be obtained by using a polyhydric alcohol component and a polyvalent carboxylic acid component such as a polyvalent carboxylic acid, a polyvalent carboxylic acid anhydride, and a polyvalent carboxylic acid ester.
Examples of the polyhydric alcohol component include a divalent alcohol (diol), and specific examples thereof include alkylene glycol (ethylene glycol, 1,2-propylene glycol, 1,3-propylene glycol, 1,4-butylene glycol, 1,6-hexanediol, and the like) having 2 to 36 carbon atoms; alkylene ether glycol (diethylene glycol, triethylene glycol, dipropylene glycol, polyethylene glycol, polypropylene glycol, polybutylene glycol, and the like) having 4 to 36 carbon atoms; alicyclic diol (1,4-cyclohexanedimethanol, hydrogenated bisphenol A, and the like) having 6 to 36 carbon atoms; alkylene oxide (ethylene oxide (hereinafter abbreviated as EO), propylene oxide (hereinafter abbreviated as PO), butylene oxide (hereinafter abbreviated as BO) adducts (in the range of 1 to 30 moles added) having 2 to 4 carbon atoms of the alicyclic diol; or alkylene oxides (such as EO, PO, and BO) adducts (in the range of 2 to 30 moles added) having 2 to 4 carbon atoms of bisphenols (such as bisphenol A, bisphenol F, and bisphenol S). These may be used in one type alone, or it may be used in combination of two or more types.
Examples of the polyvalent carboxylic acid component include divalent carboxylic acids (dicarboxylic acids), and specific examples thereof include alkanedicarboxylic acids (succinic acid, apidic acid, sebacic acid, and the like) and alkenylsuccinic acids (dodecenylsuccinic acid, and the like) having 4 to 36 carbon atoms, alicyclic dicarboxylic acids (dimer acids (dimerized linoleic acid), and the like) having 4 to 36 carbon atoms, alkene dicarboxylic acids (maleic acid, fumaric acid, citraconic acid, mesaconic acid, and the like) having 4 to 36 carbon atoms, and aromatic dicarboxylic acids (phthalic acid, isophthalic acid, and terephthalic acid or derivatives thereof, naphthalene dicarboxylic acid, and the like) having 8 to 36 carbon atoms. These may be used in one type alone, or it may be used in combination of two or more types.
The number average molecular weight of the polyester resin is preferably in the range of 1000 to 50000, and more preferably in the range of 2000 to 20000.
As the polyester resin, a commercial product may be used, and examples of the commercial product having a glass transition temperature of 40 to 90°C include VYLONAL MD-1100, MD-1200, MD-1245, MD-1500, and MD-2000 manufactured by Toyobo Co., Ltd., PLAS COAT Z-221, Z-446, and Z-561 manufactured by GOO Chemical Co., Ltd., PESRESIN A-520, A-613D, A-615GE, A-640, A-645GH, A-647GEX, A-684G, A-690, and A-695GE manufactured by Takamatsu Oil & Fat Co., Ltd., and Elitel KA-5034, KA-5071S, KA-1449, KA-0134, KA-3556, KA-6137, KZA-6034, KT-8803, and KT-9511 manufactured by Unitika Ltd. These may be used in one type alone, or it may be used in combination of two or more types.

(Urethane resin)

As the urethane resin as the water-insoluble resin fine particles, those having a hydrophilic group can be used.
The urethane resin is preferably a water dispersion in which a self-emulsifying urethane having a water-soluble functional group is dispersed in the molecule thereof, or a water dispersion of a forced-emulsifying urethane emulsified under strong mechanical shearing force by using surfactant in combination. The urethane resin in the water dispersion can be obtained by the reaction of a polyol with an organic polyisocyanate and a hydrophilic group-containing compound.

Examples of the polyol that can be used for preparing the water dispersion of the urethane resin include polyester polyol, polyether polyol, polycarbonate polyol, polyolefin-based polyol, and the like.

Examples of the polyester polyol include low-moleculate polyols such as ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol; and a condensate with polyvalent carboxylic acids such as succinic acid, glutaric acid, adipic acid, sebacic acid, phthalic acid, isophthalic acid, terephthalic acid, trimellitic acid, tetrahydrofuranic acid, endomethinetetrahydrofuranic acid, and hexahydrophthalic acid.

Examples of the polyether polyol include polyethylene glycol, polypropylene glycol, polyethylene polytetramethylene glycol, polypropylene polytetramethylene glycol, and polytetramethylene glycol.

Examples of the polycarbonate polyol can be obtained by reaction of carbonic acid derivatives such as diphenyl carbonate, dimethyl carbonate or phosgene with diols. Examples of the diol include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol A, hydrogenated bisphenol A, trimethylolpropane, and cyclohexanedimethanol.

Examples of the organic polyisocyanate that can be used for preparing the water dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and cycloaliphatic isocyanates such as isophorone diisocyanate (IPDI), 4,4'-dicyclohexylmethane diisocyanate (hydrogenated MDI, H12MDI). These may be used only one type alone, or it may be used in combination of two or more types.

Examples of the hydrophilic group-containing compound that can be used for preparing the water dispersion of the urethane resin include carboxylic acid-containing compounds such as 2,2-dimethylolpropionic acid, 2,2-dimethylolbutanoic acid, 2,2-dimethylolbutyric acid, 2,2-dimethylolvaleric acid, and glycine, and derivatives such as sodium, potassium, and amine salts thereof; and sulfonic acid-containing compounds such as taurine (that is, aminoethylsulfonic acid) and ethoxypolyethylene glycol sulfonic acid, and derivatives such as sodium, potassium, and amine salts thereof.

The urethane resin can be obtained by a known method. For example, an urethane prepolymer can be obtained by mixing the above-described polyol, an organic polyisocyanate, and a hydrophilic group-containing compound and reacting the mixture at 30 to 130°C for 30 minutes to 50 hours.

The above urethane prepolymer is extended by a chain extender and polymerized to form an urethane resin having a hydrophilic group. The chain extender is preferably water and/or an amine compound. By using water or an amine compound as the chain extender, the isocyanate-terminated prepolymer can be efficiently extended by reacting with the free isocyanate in a short time.

Examples of the amine compound as a chain extender include aliphatic polyamines such as ethylenediamine and triethylenediamine; aromatic polyamines such as metaxylenediamine and tolylenediamine; and polyhydrazino compounds such as hydrazine and adipic dihydrazide. The above amine compound may contain, together with the above polyamine, a monovalent amine such as dibutylamine or methyl ethyl ketoxime as a reaction terminator to such an extent that polymerization is not significantly inhibited.

In synthesizing the urethane prepolymer, a solvent which is inert with isocyanate and can dissolve the urethane prepolymer may be used. Exemples of these solvents include dioxane, methyl ethyl ketone, dimethylformamide, tetrahydrofuran, N-methyl-2-pyrrolidone, toluene, and propylene glycol monomethyl ether acetate. These hydrophilic organic solvents used in the reacting step are preferably removed finally.

In synthesizing the urethane prepolymer, a catalyst such as an amine catalyst (for example, triethylamine, N-ethylmorpholine, triethyldiamine, and the like), a tin-based catalyst (for example, dibutyltin dilaurate, dioctyltin dilaurate, tin octylate, and the like), and a titanium-based catalyst (for example, tetrabutyl titanate, and the like) may be added to accelerate the reaction.

The number average molecular weight of the urethane resin is preferably as large as possible by introducing a branched structure or an internal crosslinked structure, and is preferably 50000 to 10000000. When the molecular weight is within the above range, the urethane resin becomes slightly soluble in the solvent, so that a coating film excellent in weather resistance and water resistance can be obtained. The number average molecular weight (Mn) is a value measured by gel permeation chromatography (GPC), and can be obtained from a calibration curve prepared with a polystyrene reference sample using, for example, "RID-6A" manufactured by Shimadzu Corporation (column: "TSK-GEL" manufactured by Tosoh Corporation, solvent: tetrahydrofuran (THF), column temperature: 40°C).

As the above urethane resin, a commercially available product may be used. Examples of the commercially available product of the above urethane resin having a glass transition temperature of 40 to 90°C include Neorez R-967, R-600, and R-9671 manufactured by Kusumoto Chemicals, Ltd., EVAFANOL HA-560 manufactured by Nikka Chemical Co., Ltd., and SF870 manufactured by DKS Co., Ltd.

(Acrylic resin)

The acrylic resin as the water-insoluble resin fine particles can be obtained by using a copolymer with an acrylic acid ester component, a methacrylic acid ester component, a styrene component, or the like.
Examples of the acrylic acid ester component and the methacrylic acid ester component include methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxylbutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, benzyl (meth)acrylate, glycidyl (meth)acrylate, (meth)acrylate, di(meth)acrylic acid (di)ethylene glycol, di(meth)acrylic acid-1,4-butanediol, di(meth)acrylic acid-1,6-hexanodiol, tri(meth)acrylic acid trimethylolpropane, di(meth)acrylic acid glycerin, (meth)acrylic acid-2-ethylhexyl, lauryl (meth)acrylate, stearyl (meth)acrylic acid, and acrylic amide.
Examples of the styrene component include styrene, 4-methylstyrene, 4-hydroxystyrene, 4-acetoxystyrene, 4-acetylstyrene and styrenesulfonic acid. These components may be used only one type alone, or it may be used in combination of two or more types.
The number average molecular weight (Mn) of the above acrylic resin is preferably 1000 to 50000, and more preferably 2000 to 20000. This is because when the number average molecular weight (Mn) of the above acrylic resin is 1000 or more, the aggregation force of the coated film is enhanced, the adhesion is improved, and when the number average molecular weight (Mn) is 50000 or less, the solubility in the organic solvent is improved, and the particle diameter of the emulsified dispersion is accelerated to be miniaturized. The number average molecular weight (Mw) is a value measured by gel permeation chromatography (GPC), and can be obtained from a calibration curve prepared with a polystyrene reference sample using, for example, "RID-6A" manufactured by Shimadzu Corporation (column: "TSK-GEL" manufactured by Tosoh Corporation, solvent: tetrahydrofuran (THF), column temperature: 40°C).
As the above acrylic resin, a commercially available product may be used. Examples of the commercially available product of the above acrylic resin having a glass transition temperature of 40 to 90°C include acrylic emulsions such as Mowinyl 6899D, 6969D, and 6800 manufactured by Japan Coating Resin Co., Ltd., and TOCRYL W-7146, W-7147, W-7148, W-7149, and W-7150 manufactured by Toyochem Co., Ltd.

(Composite resin fine particles)

The composite resin fine particles that can be contained in the ink are preferably composite resin fine particles obtained by emulsifying an acrylic resin by an urethane resin. That is, it is preferable that the composite resin fine particles have an inner layer made of an acrylic resin and a surface layer made of an urethane resin.
Here, the above urethane resin is present at the interface between the acrylic resin as the water-insoluble resin fine particles and the water as the continuous phase, and functions as a water-insoluble resin fine particle layer different from the resin for protecting the water-insoluble resin fine particles.
By emulsifying the acrylic resin by the urethane resin to form the composite resin fine particles in this way, the physical properties of the image (coating film) can be improved and the storage stability of the composite resin fine particles can be improved, as compared with the case where the acrylic resin and the urethane resin are respectively emulsified and mixed.
In the above composite resin fine particles obtained by emulsifying the acrylic resin by the urethane resin, the value of the mass ratio (U/A) of the urethane resin (U) to the acrylic resin (A) is preferably 40/60 to 95/5. When the presence ratio of the urethane resin (U) is within the above range, the physical properties of the image (coating film) can be improved. When the presence ratio of the acrylic resin (A) is within the above range, adhesion to the acrylic film is excellent. In the above presence ratio, the value of the mass ratio (U/A) of the urethane resin (U) to the acrylic resin (A) is preferably 40/60 to 80/20.
The total resin concentration obtained by combining the acrylic resin and the urethane resin in the composite resin fine particles is not particularly limited, but is preferably 5.0 % by mass or more, and more preferably 10.0 to 70.0 % by mass. When the resin concentration is within the above range, the fixability between the base material and the ink is improved.
In the emulsification of an acrylic resin using an urethane resin, surfactant which acts as an emulsifier together with the urethane resin can be used. Here, the storage stability of the composite resin fine particles can be improved by adding an emulsifier.
As the emulsifier, anionic surfactant and nonionic surfactant can be used. In the present invention, either one of the anionic surfactant and the nonionic surfactant is preferably used, and both are more preferably used. The total blending amount of the anionic surfactant and the nonionic surfactant is preferably 1.0 to 20.0 parts by mass with respect to 100 parts by mass of the total resin. When the total blending amount of the anionic surfactant and the nonionic surfactant is 20.0 parts by mass or less, the water resistance and the solvent resistance can be improved.
The value of the blending mass ratio (X/Y) of the anionic surfactant (X) and the nonionic surfactant (Y) is

preferably 100/0 to 50/50. When the blending amount of the anionic surfactant is within the above range, the emulsifiability and the storage stability can be further improved.

Examples of the anionic surfactant that can be used for emulsification include alkyl sulfates, polyoxyethylene alkyl ether sulfates, sulfosuccinates, alpha olefin sulfonates, N-acylamino acid salt, carboxylates, and phosphates. Among these, sulfosuccinate and alpha olefin sulfonate are preferable.

Examples of the salt types include, but are not limited to, metal salts such as sodium salts, potassium salts, and magnesium salts, and triethanolamine salts.

Examples of the nonionic surfactant that can be used for emulsification include polyoxyethylene alkyl ethers, polyoxyethylene alkyl phenyl ethers, polyoxyethylene alkyl amine ethers, polyoxyethylene fatty acid esters, sorbitan fatty acid esters, sucrose fatty acid esters, and the like. Among these, polyoxyethylene alkyl ethers and polyoxyethylene alkyl phenyl ethers are preferable.

The average particle size of the above-described composite resin fine particles is not particularly limited, but is preferably 10 to 500nm, more preferably 10 to 300nm, and still more preferably 10 to 200nm. The average particle size can be measured by a commercially available particle size measuring instrument using a dynamic light scattering method, an electrophoresis method, or the like, but the measurement by a dynamic light scattering method is easy, and the particle size area can be measured accurately.

By using the composite resin fine particles obtained by emulsifying an acrylic resin by an urethane resin, it is possible to improve the fixability of the image (coating film) to a low-absorbent base material or a non-absorbent base material.

<Water-soluble solvent>

Examples of the water-soluble solvent contained in the ink according to the present invention include alcohols, polyhydric alcohols, amines, amides, glycol ethers, and 1,2-alkanediols having 4 or more carbon atoms.

Examples of the alcohols include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, and benzyl alcohol.

Examples of the polyhydric alcohols include ethylene glycol, diethylene glycol, triethylene glycol, tetraethylene glycol, polyethylene glycol having 5 or more ethylene oxide groups, propylene glycol, dipropylene glycol, tripropylene glycol, polypropylene glycol having 4 or more propylene oxide groups, butylene glycol, hexanediol, pentanediol, glycerin, hexanetriol, and thiodiglycol.

Examples of the amines include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amides include formamide, N,N-dimethylformamide, and N,N-dimethylacetamide.

Examples of the glycol ethers include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, and tripropylene glycol monomethyl ether.

Examples of the 1,2-alkanediols having 4 or more carbon atoms include 1,2-butanediol, 1,2-pentanediol, 1,2-hexanediol, and 1,2-heptanediol.

The water-soluble solvent which is particularly preferably used is a polyhydric alcohol, and can suitably suppress bleeding during high-speed printing. Specifically, ethylene glycol, diethylene glycol, triethylene glycol, tetraethylene glycol, propylene glycol, dipropylene glycol, and tripropylene glycol are preferable.

One or more kinds selected from these water-soluble solvents may be combined and contained in the ink.

The content of the water-soluble solvent in the ink is not particularly limited, but is preferably in the range of 10 to 60 % by mass.

<Water and Other additives>

The water contained in the ink according to the present invention is not particularly limited, and may be ion-exchanged water, distilled water, or pure water.

The ink according to the present invention may contain a surfactant as needed. Accordingly, it is possible to improve the ink-ejection stability and control the spread of the droplet (dot-diameter) landed on the recording medium.

The surfactant which can be used in the ink according to the present invention can be used without any particular limitation, but when an anionic compound is contained in other constituents of the ink, the ionicity of the surfactant is preferably anionic, nonionic or betaine type. In particular, in the present invention, the surfactant is preferably nonionic because when an alkaline component is contained in a surfactant such as an anionic surfactant, the aggregation property of the pigment is lowered and the resin fine particles themselves are easily aggregated.

In the present invention, fluorine-based or silicone-based surfactants having a high-static surface tension reducing ability, anionic surfactants such as dioctyl sulfosuccinate having a high-dynamic surface tension reducing ability, polyoxyethylene alkyl ethers and polyoxyethylene alkyl phenyl ethers having relatively low molecular weights, acetylene glycols, Pluronic (registered trademark) type surfactant, and nonionic surfactant such as sorbitan derivatives are preferably used. It is also preferable to use a fluorine-based or silicone-based surfactant in combination with a surfactant having a high-dynamic surface tension reducing ability.
The content of the surfactant in the ink is not particularly limited, but is preferably in the range of 0.1 to 5.0 % by mass.
In the ink used in the present invention, in addition to the above, various known additives such as a polysaccharide, a viscosity adjusting agent, a specific resistance adjusting agent, a film forming agent, an ultraviolet absorber, an antioxidant, an antifading agent, an antimold agent, a rust inhibitor, and the like can be appropriately selected and used as needed, and for example, oil droplet fine particles such as liquid paraffin, dioctyl phthalate, tricresyl phosphate, and silicone oil, the ultraviolet absorbers described in JP S57-74193A, JP S57-87988A, JP S62-261476A, and the like, the antifading agents described in JP S57-74192A, JP S57-87989A, JP S60-72785A, JP S61-146591A, JP H01-95091A, JP H03-13376A, and the like, and fluorescent whitening agents described in JP S59-42993A, JP S59-52689A, JP S62-280069A, JP S61-242871A, JP H04-219266A, and the like, in accordance with the injection stability, the printhead and ink cartridge compatibility, the preservation stability, the image preserving property, and other objectives for improving various performance.
In the ink used in the present invention and having the above configuration, the viscosity of the ink is preferably from 1 to 40mPa·s, more preferably from 2 to 10mPa·s at 25°C.

[Inkjet Recording Method]

The inkjet recording method of the present invention is an inkjet recording method for recording an image using the ink set containing the treatment liquid and the ink described above. With the method using the ink set, for example, the application of the treatment liquid constituting the ink set of the present invention and the printing using the ink constituting the ink set can be performed continuously and efficiently to the surface of the non-absorbent base material using one inkjet printer. In addition, it is possible to print characters, symbols, and the like having a small variation of the dot-diameters between the base materials and having excellent image quality.
Specifically, the inkjet recording method of the present invention includes a step of applying the treatment liquid to a recording region of a non-absorbent base material (treatment liquid applying step), a step of applying the ink to the region to which the treatment liquid is applied, by an inkjet recording system (ink applying step), and a step of heating the region to which the ink is applied, at a heating temperature equal to or higher than the cloud point and equal to or higher than the glass transition temperature (ink heating step).
In addition, the inkjet recording method of the present invention may include a treatment liquid drying step of drying the treatment liquid applied on the base material to form a treatment liquid layer after the treatment liquid applying step, in addition to the above steps.
Further, in the step of applying the ink by the inkjet recording system, it is preferable to apply the ink to the region to which the treatment liquid is applied in a state in which the drying rate of the treatment liquid is 30% or less, and it is preferable to perform the ink applying step within 10 seconds after the treatment liquid applying step. In particular, it is preferable to carry out the ink applying step within 0.1 to 5 seconds after the treatment liquid applying step, with the drying rate of the treatment liquid in the range of 1 to 10%.

<Non-absorbent Base material>

As the non-absorbent base material which can be used in the inkjet recording method of the present invention, a known plastic film can be used.
In the present invention, the term "non-absorbent" refers to a non-absorbability to water.
Specific examples of the known plastic film include polyester films such as polyethylene terephthalate, and the like, polyethylene films, polypropylene films, polyamide-based films such as nylon, polystyrene films, polyvinyl chloride films, polycarbonate films, polyacrylonitrile films, and biodegradable films such as polylactic acid films.
In order to impart gas barrier properties, moisture proofness, fragrance retention, and the like, one in which one side or both sides of the film are coated with polyvinylidene chloride or a film obtained by vapor depositing a metal oxide can also be preferably used. As the non-absorbent film, both unstretched films or stretched films can be preferably used.
The thickness of the base material is preferably in the range of 10 to 120μm, more preferably 12 to 60μm in the case of a plastic film.
Further, as a non-absorbent base material, metal base materials such as a tin plate or a tin-free steel plate

(TFS plate, thickness: 0.1 to 0.6μm) for three-piece can use are also preferably used, and for example, it can be suitably used for a packaging material for canned foods in which a thermosetting resin is provided as a coating layer. In the packaging material for the canned foods, for example, it is common to use an epoxy-phenol-based coating material or a polyester-based laminating agent on the food side, and use a polyester-based or acrylic-based thermosetting coating material on the outer side, in order to block air, water, and light and seal the food inside.

Hereinafter, each step of the inkjet recording method will be described.

<Treatment liquid Applying step>

In the treatment liquid applying step, the above-described treatment liquid is applied onto the recording medium of the non-absorbent base material.

The applying method of the treatment liquid onto the recording medium of the non-absorbent base material is not particularly limited, and preferable examples thereof include a roller coating method, a curtain coating method, a spray coating method, and an inkjet method. In particular, as a step of applying the treatment liquid, a step of using an inkjet method is preferable in that it is not necessary to apply the flocculant to the ink non-applying region, and therefore the unreacted flocculant with the ink is not released and whitening is not caused.

In the case, as will be described later, when the base material to be used is a metal base material or the like, it is preferable to dispose the metal base material on the conveyance belt, to apply and form the treatment liquid layer while the belt is conveyed, or to use a flatbed type printer for fixing the base material to form the treatment liquid layer.

<Treatment liquid Drying step>

In the present invention, it is preferable to perform the ink applying step in a state in which the drying rate of the treatment liquid is 30% or less as described above. In particular, the drying rate is more preferably 10% or less, and the step of applying the ink liquid (ink applying step) is preferably performed immediately after the treatment liquid applying step continuously. When the ink applying step is continuously performed in this manner or when the ink applying step is performed simultaneously with the treatment liquid applying step, the treatment liquid is dried together with the drying of the ink liquid. The drying rate of the treatment liquid is defined by the following formula.

$$(\text{Drying rate of treatment liquid}) = 1 - ((\text{mass of treatment liquid after drying (g)}) / (\text{mass of treatment liquid before drying (g)})$$

However, if the drying rate of the treatment liquid is within the range of 30% or less, the treatment liquid drying step may be performed between the treatment liquid applying step and the ink applying step. Here, the treatment liquid drying step is a step of drying the treatment liquid applied on the recording medium of the non-absorbent base material to form a treatment liquid layer. Drying of the treatment liquid can be performed under conditions such as removing water, water-soluble solvent, and the like, which are solvent components of the treatment liquid. The drying temperature of the treatment liquid is preferably in the range of 40 to 80°C, for example. The drying time of the treatment liquid is preferably in the range of 1 to 30 seconds, for example.

The treatment liquid may be dried, for example, by using a non-contact heating type drying device such as a drying furnace or a hot air blower, or by using a contact heating type drying device such as a hot plate or a heat roller. Alternatively, a non-contact infrared heater may be used to dry by infrared irradiation.

The drying temperature can be obtained by measuring (a) an ambient temperature such as an in-furnace temperature or a hot air temperature if a non-contact heating type drying apparatus such as a drying furnace or a hot air blower is used, (b) any one temperature selected from a temperature of a contact heating part or a surface temperature of a surface to be dried if a contact heating type drying apparatus such as a hot plate or a heat roller is used , and (c) a surface temperature of a surface to be irradiated if an infrared heater is used, during the entire period of drying of the treatment liquid.

<Ink applying step>

The ink applying step is a step of applying the ink of the ink set described above by an inkjet method at the same time as or immediately after forming a treatment liquid layer on a recording medium of the non-absorbent base material.

In the ink applying step, it is preferable to apply an ink in which the applied amount (also referred to as "amount of application") of the resin fine particles is 80 times or less per unit area with respect to the applied amount of the polyether-modified silicone. More preferably, the applied amount is in the range of 5 to 40 times.

In order to achieve the above applied amount, adjustment of the content of the polyether-modified silicone in the treatment liquid and the content of the resin fine particles in the ink, or adjustment of the amount of the treatment liquid and the ink droplets to be applied, and the like are exemplified.

The inkjet method is not particularly limited, and a printer including an inkjet head loaded with an ink can be used. Specifically, the ink is ejected from a nozzle of the inkjet head as droplets based on the digital signal and is landed on the treatment liquid layer of the base material to perform printing.

The inkjet head may be an inkjet head of either an on-demand system or a continuous system. Examples of the inkjet head of the on-demand system include electro-mechanical conversion systems including single cavity, double cavity, vendor, piston, shared mode, and shared wall types, and electro-thermal conversion systems including thermal inkjet and bubble jet types ("Bubble Jet" is a registered trademark of Canon Inc.).

Among the inkjet heads above, it is preferable to use an inkjet head in which a piezoelectric element is used as an electro-mechanical conversion element used in an electro-mechanical conversion system (also referred to as a piezo-type inkjet head).

In addition, the ink jet printer may be an inkjet head of either a scanning system or a single-pass system. For the single-pass method, it is preferable to use an inkjet head of a line-head system.

The inkjet head of the line-head system is an inkjet head with a length equal to or greater than the width of the print range. As the inkjet head of the line-head system, one head that is equal to or larger than the width of the printing range may be used, or a plurality of heads may be combined to be equal to or larger than the width of the printing range.

Further, a plurality of heads may be arranged side by side so that their nozzles are in a staggered arrangement, and the resolution of the heads as a whole may be increased.

The conveyance speed of the recording medium of the non-absorbent base material can be set, for example, in the range of 1 to 120m/min. The higher the conveyance speed, the higher the image forming speed. According to the present invention, it is possible to obtain a high-definition image with high ink fixation even at a very high linear velocity of a linear velocity of 50 to 120m/min that is applicable to an inkjet image forming process of a single-pass system.

<Ink heating step>

In the ink heating step, the ink applied on the recording medium of the non-absorbent base material, that is, the region to which the ink is applied, is heated. Thus, the ink can be dried. Here, when the treatment liquid drying step is omitted, the treatment liquid can also be dried in the ink heating step.

The heating temperature of the region to which the ink is applied in the ink heating step is set to be equal to or higher than the cloud point of the treatment liquid and equal to or higher than the glass transition temperature of the resin fine particles contained in the ink.

Specifically, it is preferably in the range of 60 to 200°C.

By heating the region to which the ink is applied in this way, water, water-soluble solvents, and the like, which are mainly solvent components of the ink, are removed, and at the same time, in particular, in the metal base material, the polyvalent metal salt is dried and thermally decomposed at a temperature equal to or higher than the thermal decomposition temperature. In addition, the image abrasion resistance and the adhesion to the non-absorbable base material are improved.

Further, the drying (heating) of the ink can be performed by the same method as the drying of the treatment liquid described above. The heating time of the ink is preferably adjusted as appropriate according to the type of the non-absorbent base material and the applied amount of ink, but is preferably 1 to 10 minutes when a non-contact heating type drying device such as a drying furnace or a hot air blower is used, or when a contact heating type drying device such as a hot plate or a heat roller is used, and is preferably 1 to 30 seconds when an infrared heater is used.

The thickness of the ink layer is preferably in the range of 0.3 to 3,0μm, and more preferably in the range of 0.5 to 2.0μm. When the thickness of the ink layer is 0.3μm or more, the adhesion and the abrasion resistance of the image can be easily improved. When the thickness of the ink layer is 3.0μm or less, the deformation stress applied to the ink layer can be reduced, so that the adhesion of the image is less likely to be impaired.

[Recording apparatus]

FIG. 1 is a schematic diagram of a preferred recording apparatus for the present invention. However, the present invention is not limited thereto, and for example, the first dryer 14 may be omitted in the recording apparatus 1 shown in FIG. 1.

The recording apparatus 1 mainly includes a treatment liquid applying part 10 and an ink applying part 20. In the treatment liquid applying part 10, a treatment liquid layer C is formed on the base material F, and the ink layer R is formed by the ink applying part 20.

The treatment liquid applying part 10 is not particularly limited as long as it can apply the treatment liquid to

the base material, but is preferably an inkjet head 21 in the present invention. In addition to the inkjet head 21, for example, a roll coater or the like may be used.

The ink applying part 20 is an inkjet head 21 capable of ejecting an ink.

In such a recording apparatus 1, the treatment liquid droplets 12 are ejected from an inkjet head 11 onto the base material F fed out from the feeding roller 30, thereby forming the treatment liquid layer C. Subsequently, the treatment liquid layer C is dried by a first dryer 14.

Next, ink droplets 22 are ejected from the inkjet head 21 onto the treatment liquid layer C to form an ink layer R, and the region to which the ink is applied is heated and dried by a second dryer 23 at a temperature equal to or higher than the cloud point of the treatment liquid according to the present invention and equal to or higher than the glass transition temperature of the resin fine particles contained in the ink according to the present invention. Thereafter, the base material F on which the treatment liquid layer C and the ink layer R are formed is wound up by the winding roller 40, and an image recorded matter is obtained.

Although FIG. 1 illustrates a case where the base material F is a film base material, in the case of a metal base material or the like, the metal base material can be disposed on the conveyance belt, and the treatment liquid layer C and the ink layer R can be applied and formed in one pass while the belt is conveyed.

In addition, although the apparatus is configured to apply an ink after applying the treatment liquid onto the base material in FIG. 1, from the viewpoint of ejecting an ink from an inkjet head in a condition in which the drying rate of the treatment liquid layer is 30% or less, an apparatus configured to apply the treatment liquid and the ink at the same time is more preferable.

Further, as an apparatus other than the recording apparatus shown in FIG. 1, a flatbed-type printer is preferably used for applying the treatment liquid and the ink. In the flatbed-type printer, the base material is fixed, and the inkjet head can be moved in a main scanning direction and a sub scanning direction intersecting the main scanning direction, and can print without conveying the base material. For metal base materials such as tinplate, it is preferable to use a flatbed-type printer that does not need to convey the base material because roll to roll conveyance is not possible, as is the case with resin film materials.

As such a flatbed type printer, a printer described in FIG. 1 of JP 2015-74161A and FIG. 1 of JP 2017-177578A can be used as an example.

[Image recorded matter]

The image recorded matter according to the present invention preferably includes a base material, a treatment liquid layer formed on the base material using the treatment liquid, and an ink layer formed on the treatment liquid layer using the ink.

As shown in FIG. 2, in the image recorded matter P, the treatment liquid according to the present invention is applied by a roll coater or the like or applied by ejecting from an inkjet head on the base material F to form a treatment liquid layer C. The ink is ejected from the inkjet head and fixed to the position where the treatment liquid layer C is fixed, and an image recording layer R is formed.

The above configuration represents a minimum configuration, and another functional layer may be formed between the base material and the treatment liquid layer, or a non-absorbent film base material or the like may be bonded to an upper layer of the ink layer via, for example, a laminate adhesive layer. At least a configuration in which the treatment liquid layer and the ink layer are in contact with each other is essential.

One example of the image recorded matter of the present invention is an the image recorded matter using at least a first the treatment liquid and the ink according to the present invention, and it is preferred embodiment in which a first layer containing a thermosetting resin, a second layer containing the treatment liquid, a third layer containing the ink, and a fourth layer containing a thermosetting resin are laminated on the metal base material in this order.

Specific examples of the image recorded matter include packaging materials for packaging canned foods, retort foods, beverages, and the like.

FIG. 3 is a cross-sectional view of a packaging material for canned foods, which is an example of the image recorded matter of the present invention.

A thermosetting resin (for example, TW-1407 series manufactured by T&K TOKA Corporation) is roller-coated on the tinplate base material 51 to form a thermosetting resin layer (base coat) 52, and an image is formed thereon by the treatment liquid layer 53 and the ink layer 54. Next, a thermosetting resin (for example, AX-10 series manufactured by T&K TOKA Corporation) is roller-coated to form a thermosetting resin layer (top coat) 55, and then heat-cured and dried to obtain a packaging material 50 for canned foods.

Examples

Hereinafter, the present invention will be described in detail with reference to Examples, but the present invention

is not limited thereto. In Examples below, unless otherwise specified, the operations were performed at room temperature (25°C). Further, unless otherwise specified, "%" and "part" mean "% by mass" and "part by mass", respectively.

[Preparation of Treatment liquid A1]

14% by mass of dipropylene glycol, 14% by mass of propylene glycol, 8% of glycerin, 1% by mass of polyether-modified silicone (BYK3450), 0.1% by mass of antifungal agent (Proxel GXL(S)), and ion-exchange water (residual; the amount that makes total amount 100% by mass) were added to 3% by mass of magnesium acetate tetrahydrate as a polyvalent metal salt while stirring, and the obtained mixture was filtered by a 1μm filter to obtain the treatment liquid A1.

[Preparation of Treatment liquids A2 to A15]

The treatment liquids A2 to A15 were prepared in the same manner as in the preparation of the treatment liquid A1 except that the types and addition amounts of the polyvalent metal salts, polyether-modified silicones, and solvent and the amount of water were changed as described in Table I below.

The materials in Table I are as follows.

<Polyether modified silicone>

"BYK3450": Manufactured by BYK-Chemie Co., Ltd.
"TEGOWET245": Manufactured by Evonik Japan Co., Ltd.
"TEGOWET250": Manufactured by Evonik Japan Co., Ltd.
"TEGOWET260": Manufactured by Evonik Japan Co., Ltd.
"TEGOWET270": Manufactured by Evonik Japan Co., Ltd.
"TEGOWET280": Manufactured by Evonik Japan Co., Ltd.
"BYK348": Manufactured by BYK-Chemie Co., Ltd.

<Solvent>

"DPG": Dipropylene glycol
"PG": Propylene glycol
"Gly": Glycerin
"1,2-HDO":1,2-hexanediol

<Antifungal agent>

"Proxel GXL(S)": 1,2-benzisothiazolin-3-one

[Physical Properties]

The cloud point and the dynamic surface tension of each treatment liquid obtained were measured by the following method.

<Cloud point>

Two milliliter of the treatment liquid was placed in a glass container and heated, and the temperature at which the treatment liquid started to become cloudy was defined as the cloud point.

<Dynamic surface tension>

As described above, the dynamic surface tension in the surface life of 15ms of the treatment liquid at 25°C was measured by the maximum bubble pressure method. The dynamic surface tensiometer used for the measurement is a bubble pressure dynamic surface tensiometer (manufactured by KRUSS Scientific, model "BP100").

[Evaluation]

<Storage stability>

After the treatment liquids A1 to A15 were heated at 60°C for 2 weeks, the dynamic surface tension in the surface life of 15ms of the treatment liquid at 25°C was measured by the maximum bubble pressure method as described above. The dynamic surface tensiometer used for the measurement is a bubble pressure dynamic surface tensiometer (manufactured by KRUSS Scientific, model "BP100").

Then, the difference between the dynamic surface tension of the pretreatment liquid before heating and the dynamic surface tension of the treatment liquid after heating was calculated, and the storage stability was evaluated on the basis of the following criteria.

(Criteria)

○ (circle): The difference between the dynamic surface tension of the treatment liquid before heating and the dynamic surface tension of the treatment liquid after heating is 2mN/m or more.

△ (triangle): The difference between the dynamic surface tension of the treatment liquid before heating and the dynamic surface tension of the treatment liquid after heating is 1mN/m or more and less than 2mN/m.

x (cross mark): The difference between the dynamic surface tension of the treatment liquid before heating and the dynamic surface tension of the treatment liquid after heating is less than 1mN/m.

[Table 1]

TABLE I

| | Treatment liquid No. | A1 | A2 | A3 | A4 | A5 | A6 | A7 | A8 |
|---|---|---|---|---|---|---|---|---|---|
| Polyvalent metal salt [% by mass] | Magnesium acetate tetrahydrate | 3 | | | | | | | |
| | Calcium acetate hydrate | - | 3 | 3 | 3 | 3 | 3 | 3 | 0.25 |
| Polyether-modified silicone [% by mass] | BYK3450 | 1 | 1 | 1 | | | - | - | |
| | TEGOWET245 | | | | 1 | 0.25 | - | - | 1 |
| | TEGOWET250 | - | - | - | - | 0.75 | | 1 | - |
| | TEGOWET260 | - | - | - | - | - | 1 | - | - |
| | TEGOWET270 | - | - | - | - | - | - | - | - |
| | TEGOWET280 | - | - | - | - | | - | - | - |
| | BYK348 | - | - | - | | - | - | - | - |
| Solvent [% by mass] | DPG | 14 | 14 | 7 | - | 28 | - | 45 | - |
| | PC | | 14 | 21 | 25 | - | 25 | - | 25 |
| | Gly | 8 | 8 | 8 | 5 | 8 | 5 | - | |
| | 1,2-HDO | - | | | | | | - | |
| Water [% by mass] | | 59.90 | 59.90 | 59.90 | 65.90 | 59.90 | 65.90 | 50.90 | 68.65 |
| Antifungal agent [% by mass] | Proxel GXL(S) | 0.10 | 0.10 | 0.10 | 0.10 | 0.10 | 0.10 | 0.10 | 0.10 |

(continued)

| | Treatment liquid No. | A1 | A2 | A3 | A4 | A5 | A6 | A7 | A8 |
|---|---|---|---|---|---|---|---|---|---|
| Physical properties | Cloud point [°C] | 72 | 68 | 42 | 60 | 45 | 42 | 50 | 70 |
| | Dynamic surface tension [mN/m] | 29 | 29 | 34 | 34 | 30 | 33 | 30 | 34 |
| Evaluation | Storage stability | ○ | ○ | △ | ○ | △ | △ | ○ | ○ |
| | Treatment liquid No. | A9 | A10 | A11 | A12 | A13 | A14 | A15 | |
| Polyvalent metal salt [% by mass] | Magnesium acetate tetrahydrate | - | - | - | - | - | - | - | |
| | Calcium acetate hydrate | 25 | 3 | 3 | 3 | 3 | 3 | 3 | |
| Polyether-modified silicone [% by mass] | BYK3450 | - | - | - | - | - | - | - | |
| | TEGOWET245 | 1 | 2.5 | - | - | 1 | - | - | |
| | TEGOWET250 | - | - | - | - | - | - | - | |
| | TEGOWET260 | | - | - | - | - | - | - | |
| | TEGOWET270 | - | - | - | - | - | 1 | - | |
| | TEGOWET280 | - | - | - | - | - | - | 1 | |
| | BYK348 | - | - | 1 | 0.60 | - | - | - | |
| Solvent [% by mass] | DPG | - | - | - | - | 40 | - | - | |
| | PG | 25 | 25 | 28 | 19 | - | 25 | 25 | |
| | Gly | 5 | 5 | - | - | - | 5 | 5 | |
| | 1,2-HDO | - | - | - | 3 | - | - | - | |
| Water [% by mass] | | 43.90 | 64.40 | 67.90 | 74.30 | 55.90 | 65.90 | 65.90 | |
| Antifungal agent [% by mass] | Proxel GXL(S) | 0.10 | 0.10 | 0.10 | 0.10 | 0.10 | 0.10 | 0.10 | |
| Physical properties | Cloud point [°C] | 50 | 45 | 72 | 82 | 95 | 15 | 27 | |
| | Dynamic surface tension [mN/m] | 34 | 32 | 41 | 37 | 32 | 33 | 33 | |
| Evaluation | Storage stability | ○ | | △ ○ | ○ | ○ | × | × | |

As shown in the above results, it can be seen that the treatment liquid having a cloud point of 40°C or higher is excellent in storage stability, and in particular, the treatment liquid having a cloud point of 50°C or higher is excellent in storage stability.

[Resin fine particle dispersion liquids B1 to B7]

Table II below shows the results of measuring the aggregation property and the glass transition temperature (Tg) of the resin fine particles in the resin fine particle dispersion liquids B1 to B7, which are commercially available products described in Table II below.

<Aggregation property >

The aggregation property was measured by the following method.

First, in order to prepare a mixture having 5% by mass of resin fine particles and 0.15% by mass of calcium acetate monohydrate, a calcium acetate aqueous solution in which calcium acetate monohydrate is dissolved in ion-exchanged water so as to be 0.30% by mass, and diluted solutions of the resin fine particle dispersion liquids prepared with ion-exchanged water so as to have respective solid contents of 10 % by mass using each of the resin fine particle dispersion liquids B1 to B7 shown in Table II were prepared.

Next, 5g of the calcium acetate aqueous solution was added to 5g of the diluted solution of the resin fine particle dispersion liquid while stirring to prepare 10g of each mixture having a solid content of 5% by mass and a calcium acetate monohydrate of 0.15% by mass.

Then, 10g of each mixture was centrifuged at a centrifugal acceleration of 200G and a centrifugal time of 10 minutes using a centrifuge CF 16RX manufactured by Hitachi Koki Co., Ltd., and about 2g of each supernatant was collected from the separated solutions.

Next, water was removed by heating each supernatant at 150°C for 30 minutes, and the mass of the solid remaining after heating was measured. The mass of the obtained solid content was substituted into the following formula to calculate the aggregation property, respectively.

$$\text{Formula: Aggregation property} = 1 - (\text{mass of solid content (g)}/\text{mass of collected supernatant (g)} \times 5\%)$$

<Glass transition temperature>

The glass transition temperature (Tg) of the resin fine particles was determined by reading the glass transition temperature Tg from the endothermic peak when the temperature was increased in the temperature range of -30 to 200°C at a heating rate of 10°C/min using DSC (Differential Scanning Calorimeter).

[Table 2]

TABLE II

| Resin particle dispersion No. | Product name | Manufacturer | Polymer | Tg[°C] | Aggregation property |
|---|---|---|---|---|---|
| B1 | VYLONAL MD2000 | Toyobo Co., Ltd | Polyester | 67 | 0.01 |
| B2 | VYLONAL MD1480 | Toyobo Co., Ltd | Polyester | 20 | 0.1 |
| B3 | Mowinyl 6969D | Japan Coating Resin Co., Ltd. | Acryl | 71 | 0.01 |
| B4 | Mowinyl 6763 | Japan Coating Resin Co., Ltd. | Acryl | 13 | 1 |
| B5 | EVAFANOL HA-560 | Nicca Chemical Co., Ltd. | Urethane | 60 | 0.01 |
| B6 | PLAS COAT Z-730 | GOO Chemical Co., Ltd. | Polyester | 46 | 0.33 |
| B7 | PLAS COAT Z-687 | GOO Chemical Co., Ltd. | Polyester | 110 | 0,01 |

[Preparation of Cyan Ink]

<Preparation of Cyan pigment dispersion liquid>

A mixture in which 6% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.), 22% by mass of propylene glycol, 0.1% by mass of antifungal agent Proxel GXL(S), and ion-exchanged

water (residual; the amount that makes total amount 100% by mass) are added to 20% by mass of a pigment (C.I. Pigment Blue 15:3), was premixed.

Then, it was dispersed using a bead mill in which zirconia beads of 0.3mm were filled in 50% by volume to prepare a cyan pigment dispersion liquid having a pigment content of 20% by mass.

The average particle size of the pigment particles contained in the cyan pigment dispersion liquid was 120nm. The average particle size of the pigment particles was measured by "Zetasizer Nano S90" manufactured by Malvern Ltd.

<Preparation of Cyan Ink C1>

The commercially available resin fine particle dispersion liquid B1 (the addition amount is adjusted so that the resin fine particles (solid content) in the ink are 5% by mass), 22% by mass of propylene glycol, 5% by mass of glycerin, 0.20% by mass of surfactant KF351A (Shin-Etsu Silicone), 1% by mass of surfactant E1010 (Nisshin Chemical Co., Ltd.), 0.10% by mass of antifungal agent Proxel GXL(S), and ion-exchanged water (residual; the amount that makes total amount 100% by mass) were added to 15% by mass (3% by mass as a solid content) of the cyan pigment dispersion liquid while stirring, and the obtained mixture was filtered through a 1μm filter to obtain a cyan ink C1. There was no substantial compositional change before and after filtration.

<Preparation of Cyan Inks C2 to C8>

Cyan inks C2 to C8 were prepared in the same manner as in the preparation of the cyan ink C1 except that the type and content of the commercially available resin fine particle dispersion liquids were changed as described in Table III below.

[Preparation of Magenta Ink]

<Preparation of Magenta pigment dispersion liquid>

A mixture in which 8% by mass of a pigment dispersant (an acrylic dispersant having dimethylaminoethanol neutralized carboxy group ("Joncryl 819", acid value 75mgKOH/g, solid content 20% by mass, manufactured by BASF Japan Ltd.), 22% by mass of propylene glycol, 0.1% of antifungal agent Proxel GXL(S), and ion-exchanged water (residual; the amount that makes total amount 100% by mass) are added to 20% by mass of a pigment (Pigment Red 122, Pigment Violet 19) was premixed.

Then, it was dispersed using a bead mill in which zirconia beads of 0.3mm were filled in 50% by volume to prepare a magenta pigment dispersion liquid having a pigment content of 20% by mass.

The average particle size of the pigment particles contained in the magenta pigment dispersion liquid was 140nm. The average particle size of the pigment particles was measured by "Zetasizer Nano S90" manufactured by Malvern Ltd.

<Preparation of Magenta Ink D1>

The commercially available resin fine particle dispersion liquid B1 (the addition amount is adjusted so that the resin fine particles (solid content) in the ink are 5% by mass), 21% by mass of propylene glycol, 5% by mass of glycerin, 0.20% by mass of surfactant KF351A (Shin-Etsu Silicone), 1% by mass of surfactant E1010 (Nisshin Chemical Co., Ltd.), 0.10% by mass of antifungal agent Proxel GXL(S), and ion-exchanged water (residual; the amount that makes total amount 100% by mass) were added to 20% by mass (4% by mass as a solid content) of the magenta pigment dispersion liquid while stirring, and the obtained mixture was filtered through a 1μm filter to obtain a magenta ink D1. There was no substantial compositional change before and after filtration.

<Preparation of Magenta Inks D2 to D8>

Magenta inks D2 to D8 were prepared in the same manner as in the preparation of the magenta ink D1, except that the type and content of the commercially available resin fine particle dispersion liquids were changed as described in Table III below.

[Physical Properties]

The dynamic surface tension of each ink obtained was measured by the following method.

<Dynamic surface tension>

As described above, the dynamic surface tension in the surface life of 15ms of the ink at 25°C was measured by the maximum bubble pressure method. The dynamic surface tensiometer used for the measurement is a bubble pressure dynamic surface tensiometer (manufactured by KRUSS Scientific, model "BP100").

[Table 3]

TABLE **III**

| | Ink No. | C1 | C2 | C3 | C4 | C5 | C6 | C7 | C8 |
|---|---|---|---|---|---|---|---|---|---|
| Pigment dispersion [% by mass] | Cyan pigment dispersion | 15 | 15 | 15 | 15 | 15 | 15 | 15 | 15 |
| | Magenta pigment dispersion | - | - | - | - | - | - | - | - |
| Resin particle dispersion [% by mass] | B1 | 13 (*1) | - | - | - | - | - | - | 31 (*2) |
| | B2 | | 20 (*1) | - | - | - | - | - | - |
| | B3 | - | - | 12 (*1) | - | - | - | - | - |
| | B4 | - | - | - | 13 (*1) | - | - | - | - |
| | B5 | - | - | - | - | 14 (*1) | - | - | - |
| | 86 | - | - | - | - | - | 20 (*1) | - | - |
| | B7 | - | - | - | - | - | - | 20 (*1) | - |
| Surfactant [% by mass] | KF351A | 0.20 | 0.20 | 0.20 | 0.20 | 0.20 | 0.20 | 0.20 | 0.20 |
| | E1010 | 1 | 1 | 1 | 1 | 1 | 1 | 1 | 1 |
| Solvent [% by mass] | PG | 22 | 22 | 22 | 22 | 22 | 22 | 22 | 22 |
| | Gly | 5 | 5 | 5 | 5 | 5 | 5 | 5 | 5 |
| | DEGBE | 1.6 | 1.6 | 1.6 | 1.6 | 1.6 | 1.6 | 1.6 | 1.6 |
| Water [% by mass] | | 42.60 | 35.10 | 43.20 | 42.60 | 40.81 | 35.10 | 35.10 | 23.85 |
| Antifungal agent [% by mass] | Proxel GXL(S) | 0.10 | 0.10 | 0.10 | 0.10 | 0.10 | 0.10 | 0.10 | 0.10 |
| Physical properties | Dynamic tension [mN/m] | 30 | 39 | 41 | 41 | 40 | 40 | 40 | 39 |
| *1: Solid content 5% | | *2: Solid content 12.5% | | | | | | | |

(continued)

| | Ink No. | D1 | D2 | D3 | D4 | D5 | D6 | D7 | D8 |
|---|---|---|---|---|---|---|---|---|---|
| Pigment dispersion [% by mass] | Cyan pigment dispersion | - | - | - | - | - | - | - | - |
| | Magenta pigment dispersion | 20 | 20 | 20 | 20 | 20 | 20 | 20 | 20 |
| Resin particle dispersion [% by mass] | 81 | 13 (*1) | - | - | - | - | - | - | 31 (*2) |
| | 82 | - | 20 (*1) | - | - | - | - | - | - |
| | B3 | - | - | (*1) | - | - | - | - | - |
| | B4 | - | - | - | 13 (*1) | - | - | - | - |
| | B5 | - | - | - | - | 14 (*1) | - | - | - |
| | B6 | - | - | - | - | - | 20 (*1) | - | - |
| | B7 | - | - | - | - | - | - | 20 (*1) | - |
| Surfactant [% by mass] | KF351A | 0.20 | 0.20 | 0.20 | 0.20 | 0.20 | 0.20 | 0.20 | 0,20 |
| | E1010 | 1 | 1 | 1 | 1 | 1 | 1 | 1 | 1 |
| Solvent [% by mass] | PG | 21 | 21 | 21 | 21 | 21 | 21 | 21 | 21 |
| | Gly | 5 | 5 | 5 | 5 | 5 | 5 | 5 | 5 |
| | DEGBE | 1.6 | 1.6 | 1.6 | 1.6 | 1.6 | 1.6 | 1.6 | 1.6 |
| Water [% by mass] | | 38.60 | 31.10 | 39.20 | 38.60 | 36.81 | 31.10 | 31.10 | 19.85 |
| Antifungal agent [% by mass] | Proxel GXL(S) | 0.10 | 0.10 | 0.10 | 0.10 | 0.10 | 0.10 | 0.10 | 0.10 |
| Physical properties | Dynamic surface tension [mN/m] | 39 | 39 | 41 | 41 | 40 | 40 | 40 | 39 |
| *1: Solid content 5% *2: Solid content 12.5% | | | | | | | | | |

[Preparation of Tinplate]

A white base coat (KC White 2, Toyochem Co., Ltd.) was applied to a black plate (SPTE, thickness 300μm, Standard Testpiece) using a non-wire bar coater (OSP-10, OSG System Products Co., Ltd.).

[Print Test 1]

The treatment liquids A1 to A10, the inks C1 to C8, and D1 to D8 prepared above were combined as shown in Table IV and printed as follows.

An independent drive inkjet head (360dpi, ejection amount: 15pL) manufactured by Konica Minolta, Inc. was

installed as shown in FIG. 4, and the head unit U was moved in the scanning direction X and recording medium (base material) M was moved in the conveyance direction Y (not shown), whereby the treatment liquid and the ink were applied to the surface (image forming surface) of the recording medium M, and an image was formed as follows.

As the recording medium (non-absorbent base material), a black plate (SPTE, thickness 300μm, Standard Testpiece) coated with the white base coat and a PET film (FE2001, thickness 50μm, manufactured by Futamura Chemical Co., Ltd.) were prepared.

From the front side in the scanning direction X, the treatment liquid (reference numeral Pr in FIG. 4), magenta ink (reference numeral $I_M$ in FIG. 4), and cyan ink (reference numeral Ic in FIG. 4) prepared above were placed in the head module in this order.

The moving speed of the head unit was set to 500mm/sec. The image was formed by dividing an image of 720dpi×720dpi into two each in the scanning direction X and the conveyance direction Y to obtain four images (180dpi×180dpi), and printing one print region four times. When a recording medium was passed four times, the treatment liquid had a printing rate of 28%, that is, the added amount of the treatment liquid was 3.4g/$m^2$, and the cyan ink and the magenta ink had a printing rate of 100%, respectively, that is, the recording medium was printed with a solid full-surface printed image in which the added amount of the ink of the two colors was 24g/$m^2$ (added amount of cyan ink was 12g/$m^2$ and added amount of magenta ink was 12g/$m^2$). In the black plate, a solid full-surface printed image was printed on the surface coated with the white base coat.

Here, an ink was applied to the region to which the treatment liquid was applied in such a manner that the drying rate of the treatment liquid was as described in Table IV, by an inkjet recording system. Specifically, a print test was performed under the environment of 25°C and 50%RH, and the period from the application of the treatment liquid to the application of the ink was set to 0.2 seconds. When the drying rate of the treatment liquid after 0.2 seconds from the application of the treatment liquid under the environment of 25°C and 50%RH was measured, the drying rate was 1% or less. The drying rate of the treatment liquid was calculated by measuring the amount of change in mass of the treatment liquid.

After the printing, the material was charged into a dryer set to the drying temperature (tinplate, PET) described in Table IV, and dried for 10 minutes to obtain an image recorded matter. Here, it is assumed that the temperature of the region to which the ink is applied is equal to the drying temperature.

In Table IV, "≦ 1" represents "1% or less".

[Evaluation]

<Tinplate adhesion>

Using a falling body type weight drop resistance tester (083, Allgood Co., Ltd), a weight with a mass of 1 000g was dropped from the height of 100cm to the back of a printed surface of a printed matter on the black plate among the image recorded matters obtained above to deform the black plate. The image adhesion of the image printed surface of the deformed part was evaluated on the basis of the following criteria.

(Criteria)

◎ (double circle): The printed surface does not change even after the drop test, and the image does not peel off even if it is rubbed with a fingernail.
○ (circle): The printed surface does not change even after the drop test, but the image is partly peeled off when rubbed with a fingernail.
△ (triangle): The printed surface does not change after the drop test, but the image is peeled off as a whole when rubbed with a fingernail.
× (cross mark): Peeling of the image is observed on the printed surface after the drop test.

<PET adhesion>

An adhesive tape was adhered to a printed surface of a printed matter on the PET among the image recorded matters obtained above, and then peeled off to evaluate the image adhesion on the basis of the following criteria.

(Criteria)

◎ (double circle): The image does not peel off even if the tape is peeled.
○ (circle): About one quarter of the image on the tape adhesive surface peels off along with the tape.
△ (triangle): About half of the image on the tape adhesive surface peels off along with the tape.
× (cross mark): All of the image on the tape adhesive surface peels off along with the tape.

[Table 4]

TABLE **IV**

| | Treatment liquid | | Ink | | | Printing process | | | | | | Evaluation | |
|---|---|---|---|---|---|---|---|---|---|---|---|---|---|
| | No. | point [°C] | Cyan/ Magenta | Resin dispersion | Resin particle Tg [°C] | *1 [g/m$^2$] | *2 [g/m$^2$] | Y/X | *3 [%] | Tinplate drying temperature [°C] | PET drying temperature [°C] | Tinplate adhesion | PET adhesion |
| Example 1 | A1 | 72 | C1/D1 | B1 | 67 | 0.034 | 1.2 | 36 | ≤1 | 150 | 80 | ◎ | ◎ |
| Example 2 | A2 | 68 | C1/D1 | B1 | 67 | 0.034 | 1.2 | 36 | <1 | 150 | 80 | ◎ | ◎ |
| Example 3 | A3 | 42 | C1/D1 | B1 | 67 | 0.034 | 1.2 | 36 | ≤1 | 150 | 80 | ◎ | ◎ |
| Example 4 | A4 | 60 | C1/D1 | B1 | 67 | 0.034 | 1.2 | 36 | ≤1 | 150 | 80 | ◎ | ◎ |
| Example 5 | A5 | 45 | C1/D1 | B1 | 67 | 0.034 | 1.2 | 36 | ≤1 | 150 | 80 | ◎ | ◎ |
| Example | A6 | 42 | C1/D1 | B1 | 67 | 0.034 | 1.2 | 36 | ≤1 | 150 | 80 | ◎ | ◎ |
| Example | A7 I | 50 | C1/D1 | B1 | 67 | 0.034 | 1.2 | 36 | ≤1 | 150 | 80 | ○ | ○ |
| Example 8 | A8 | 70 | C1/D1 | B1 | 67 | 0.034 | 1.2 | 36 | ≤1 | 150 | 80 | ○ | △ |
| Example 9 | A9 | 50 | C1/D1 | B1 | 67 | 0.034 | 1.2 | 36 | ≤1 | 150 | 80 | △ | ○ |
| Example 10 | A10 | 45 | C1/D1 | B1 | 67 | 0.085 | 1.2 | 14 | ≤1 | 150 | 80 | ◎ | ◎ |
| Example 11 | A1 | 72 | C3/D3 | B3 | 71 | 0.034 | 1.2 | 36 | ≤1 | 150 | 80 | ◎ | ◎ |
| Example 12 | A1 | 72 | C5/D5 | B5 | 60 | 0.034 | 1.2 | 36 | ≤1 | 150 | 80 | ◎ | ◎ |
| Example 13 | A1 | 72 | C6/D6 | B6 | 46 | 0.034 | 1.2 | 36 | ≤1 | 150 | 80 | ○ | △ |
| Example 14 | A1 | 72 | C8/D8 | B1 | 67 | 0.034 | 3 | 88 | ≤1 | 150 | 80 | △ | ○ |
| Example 15 | A2 | 68 | C3/D3 | B3 | 71 | 0.034 | 1.2 | 36 | ≤1 | 150 | 80 | ◎ | ◎ |
| Example 16 | A2 | 68 | C5/D5 | B5 | 60 | 0.034 | 1.2 | 36 | ≤1 | 150 | 80 | ◎ | ◎ |
| Example 17 | A2 | 68 | C6/D6 | B6 | 46 | 0.034 | 1.2 | 36 | ≤1 | 150 | 80 | ○ | △ |
| Example 18 | A2 | 68 | C8/D8 | B1 | 67 | 0.034 | 3 | 88 | ≤1 | 150 | 80 | △ | ○ |
| Example | A1 | 72 | C1/D1 | B1 | 67 | 0.034 | 1.2 | 36 | ≤1 | 80 | 80 | ○ | ○ |

(continued)

| No. | Cloud point [°C] | Cyan/ Magenta | Resin particle dispersion | Resin particle Tg [°C] | *1 [g/m$^2$] | *2 [g/m$^2$] | Y/X | *3 [%] | Tinplate drying temperature | PET drying temperature [°C] | Tinplate adhesion | PET adhesion | |
|---|---|---|---|---|---|---|---|---|---|---|---|---|---|
| Comparative Example1 | A1 | 72 | C1/D1 | B1 | 67 | 0.034 | 1.2 | 36 | ≤1 | 70 | 70 | × | Δ |
| Comparative Example2 | A1 | 72 | C1/D1 | B1 | 67 | 0.034 | 1.2 | 36 | ≤1 | 60 | 60 | × | × |
| Comparative Example3 | A11 | 72 | C1/D1 | B1 | 67 | 0.034 | 1.2 | 36 | ≤1 | 150 | 80 | × | × |
| Comparative Example4 | A12 | 82 | C1/D1 | B1 | 67 | 0.020 | 1.2 | 60 | ≤1 | 150 | 80 | × | × |
| Comparative Example5 | A13 | 95 | C1/D1 | B1 | 67 | 0.034 | 1.2 | 36 | ≤1 | 150 | 80 | × | × |
| Comparative Example6 | A2 | 68 | C2/D2 | B2 | 20 | 0.034 | 1.2 | 36 | ≤1 | 150 | 80 | Δ | × |
| Comparative Example7 | A2 | 68 | C4/D4 | B4 | 13 | 0.034 | 1.2 | 36 | ≤1 | 150 | 80 | × | × |
| Comparative Example8 | A2 | 68 | C7/D7 | B7 | 110 | 0.034 | 1.2 | 36 | ≤1 | 150 | 80 | × | × |

* I: Amount X of Surfactant contained in Treatment liquid *2: Amount Y of Resin contained in Ink
*3: Drying rate of Treatment liquid before Ink printing

As shown in the above results, it can be seen that Examples 1 to 19 have excellent adhesion to a non-absorbent base material and image abrasion resistance as compared to Comparative Examples 1 to 8.

[Print Test 2]

Two independent drive heads of piezo-type inkjet head (360dpi, ejection amount 15pL) manufactured by Konica Minolta, Inc. were arranged so that the nozzles were alternately arranged, and a head module of 720dpi×720dpi was prepared, and installed in the single-pass printer illustrated in FIG. 1 so that nozzle rows were perpendicular to the conveyance direction.

The inkjet head 11 of the head module installed in the treatment liquid applying part 10 was filled with the treatment liquid A1 or A2 obtained as described above, and inkjet head 21 of the head module installed in the ink applying part 20 was filled with the inks C1 and D1 obtained as described above. In this way, the inkjet recording apparatus of a single-pass system capable of recording the treatment liquids and the inks described in Table V was constructed.

Using the above inkjet recording apparatus, the same solid full-surface printed images of 720dpi×720dpi as in the print test 1 were recorded under the recording conditions described in Table V, and evaluated using the same index as in the print test 1. As the base material F, a black plate (SPTE, thickness 300μm, Standard Testpiece) coated with the white base coat and a PET film (FE2001, thickness 50μm, manufactured by Futamura Chemical Co., Ltd.) were prepared. The conveyance speed at the time of recording was set to 300mm/sec.

Here, the ink was applied by the inkjet recording system to the region to which the treatment liquid was applied in a state where a drying rate of the treatment liquid was as shown in Table V. Specifically, a print test was performed under the environment of 25°C and 50%RH, and the treatment liquid layer C was dried at 25°C, 50°C, or 60°C for 5 seconds by the first dryer 14 to apply the ink. After the treatment liquid layer C was at 25°C, 50°C or 60°C for 5 seconds by the first dryer 14, the drying rate of the treatment liquid was measured to be 10%, 20%, and 50%, respectively. The drying rate of the treatment liquid was calculated by measuring the amount of change in mass of the treatment liquid.

After the printing, the matter was dried for 10 minutes by the first dryer 23, which was set to the drying temperature shown in Table V, to obtain an image recorded matter. Here, it is assumed that the temperature of the region to which the ink is applied is equal to the drying temperature.

[Table 5]

TABLE V

| | Treatment liquid | | Ink | | | Printing process | | | | | | Evaluation | |
|---|---|---|---|---|---|---|---|---|---|---|---|---|---|
| | No. | Cloud point [°C] | Cyan/ Magenta | Resin particle dispersion | Resin particle Tg [°C] | *1 [g/m$^2$] | *2 [g/m$^2$] | Y/X | *3 [%] | Tinplate drying temperature [°C] | PET drying temperature [°C] | Tinplate adhesion | PET adhesion |
| Example 20 | A1 | 72 | C1/D1 | B1 | 67 | 0.034 | 1.2 | 36 | 10 | 150 | 80 | ◎ | ◎ |
| Example 21 | A2 | 68 | C1/D1 | B1 | 67 | 0.034 | 1.2 | 36 | 10 | 150 | 80 | ◎ | ◎ |
| Example 22 | A1 | 72 | C1/D1 | B1 | 67 | 0.034 | 1.2 | 36 | 20 | 150 | 80 | ○ | ◎ |
| Example 23 | A2 | 68 | C1/D1 | B1 | 67 | 0.034 | 1.2 | 36 | 20 | 150 | 80 | ○ | ◎ |
| Example 24 | A1 | 72 | C1/D1 | B1 | 67 | 0.034 | 1.2 | 36 | 50 | 150 | 80 | ○ | ○ |
| Example 25 | A2 | 68 | C1/D1 | B1 | 67 | 0.034 | 1.2 | 36 | 50 | 150 | 80 | ○ | ○ |

*1: Amount X of Surfactant contained in Treatment liquid *2: Amount Y of Resin contained in Ink
*3: Drying rate of Treatment liquid before Ink printing

As shown in the above results, when the drying rate is 30% or less, preferably 10% or less, excellent adhesion to the non-absorbent base material can be obtained.

Industrial Applicability

The present invention can be applied to an ink set which can obtain excellent adhesion to a non-absorbent base material and image abrasion resistance, and which is excellent in storage stability, and an inkjet recording method.

Description of Reference Numerals

1 recording apparatus
10 treatment liquid applying part
11 inkjet head
12 treatment liquid droplet
14 first dryer
20 ink applying part
21 inkjet head
22 ink droplet
23 second dryer
30 feeding roller
40 winding roller
C treatment liquid layer
F base material
P image recorded matter
R ink layer
50 packaging materials for canned foods
51 tinplate base material
52 thermosetting resin layer (base coat)
53 treatment liquid layer
54 ink layer
55 thermosetting resin layer (top coat)
U head unit
X scanning direction
M recording medium (base material)

## Claims

1. An ink set comprising a treatment liquid and an ink, wherein

   the treatment liquid contains at least a polyvalent metal salt, a polyether-modified silicone, a water-soluble solvent, and water,
   the ink contains a colorant and resin fine particles having a glass transition temperature within the range of 40 to 90°C,
   a cloud point of the treatment liquid is in the range of 40 to 90 °C, and,
   a dynamic surface tension in the surface life of 15ms of the treatment liquid at 25°C is in the range of 25 to 35mN/m.

2. The ink set according to claim 1, wherein the ink contains the range of 3 to 15% by mass of the resin fine particles having an aggregation property of 0.2 or less with 0.15% by mass of a calcium acetate monohydrate aqueous solution.

3. The ink set according to claim 1 or 2, wherein a dynamic surface tension in the surface life of 15ms of the ink at 25°C is 5mN/m or higher than a dynamic surface tension in the surface life of 15ms of the treatment liquid at 25°C.

4. The ink set according to any one of claims 1 to 3, wherein the treatment liquid contains the range of 5 to 40% by mass of the water-soluble solvent having an SP value of 24 $(J/cm^3)^{1/2}$ or more.

**5.** The ink set according to any one of claims 1 to 4, wherein the treatment liquid contains the range of 0.5 to 20% by mass of the polyvalent metal salt.

**6.** The ink set according to any one of claims 1 to 5, wherein the treatment liquid contains the range of 0.1 to 2% by mass of the polyether-modified silicone.

**7.** An inkjet recording method for recording an image using an ink set according to any one of claims 1 to 6, comprising the steps of:

applying the treatment liquid to a recording region of a non-absorbent base material;
applying the ink to the region to which the treatment liquid is applied, by an inkjet recording system; and
heating the region to which the ink is applied, at a heating temperature equal to or higher than the cloud point and equal to or higher than the glass transition temperature.

**8.** The inkjet recording method according to claim 7, comprising a step of applying the ink to the region to which the treatment liquid is applied, by an inkjet recording system in a state where a drying rate of the treatment liquid is 30% or less.

**9.** The inkjet recording method according to claim 7 or 8, wherein an applied amount of the resin fine particles to an applied amount of the polyether-modified silicone is 80 times or less per unit area.

FIG.1

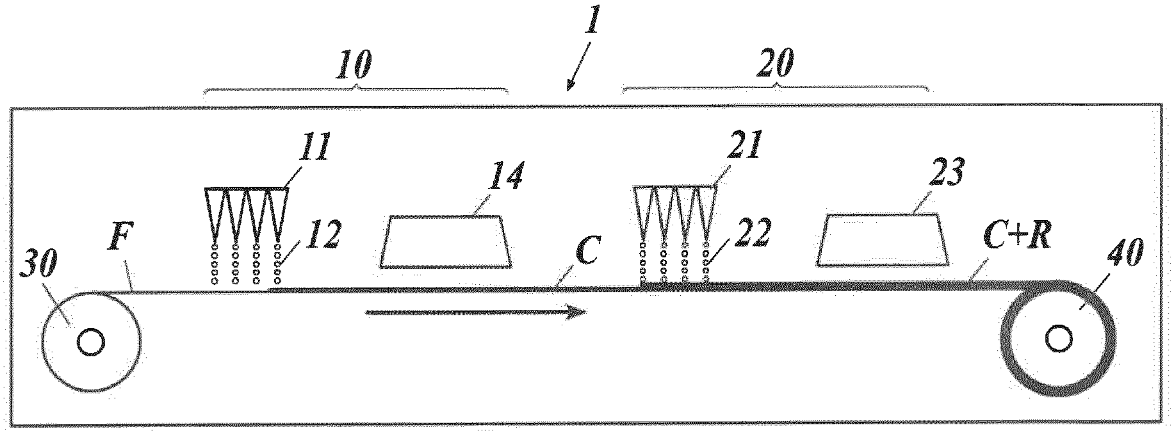


FIG.2

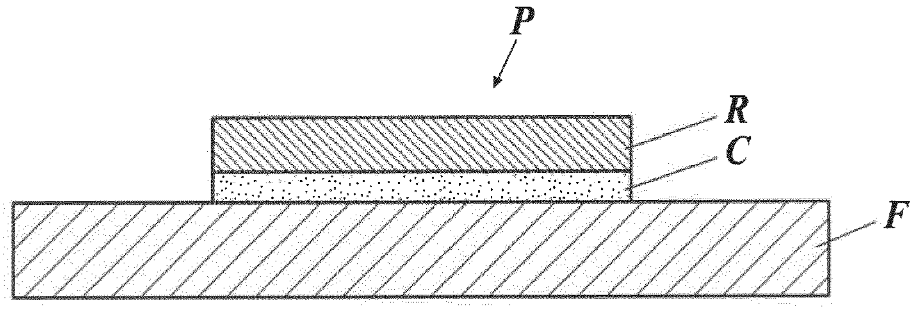


FIG.3

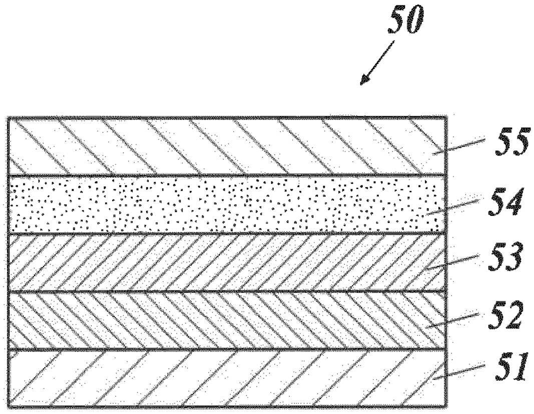

FIG.4

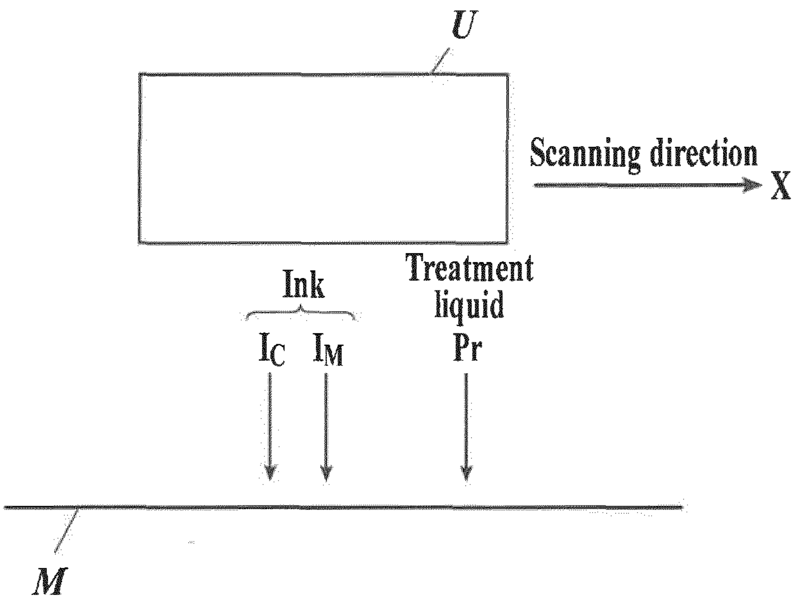

## INTERNATIONAL SEARCH REPORT

International application No.
PCT/JP2021/015742

A. CLASSIFICATION OF SUBJECT MATTER
B41J 2/01(2006.01)i; C09D 11/54(2014.01)i; B41M 5/00(2006.01)i
FI: C09D11/54; B41M5/00 130; B41M5/00 120; B41J2/01 501

According to International Patent Classification (IPC) or to both national classification and IPC

B. FIELDS SEARCHED

Minimum documentation searched (classification system followed by classification symbols)
B41J2/01; C09D11/54; B41M5/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-144437 A (CANON INC) 25 July 2013 (2013-07 25) claims, paragraphs [0007], [0031], [0035]-[0047], [0055], [0065], examples | 1-9 |
| X | JP 2021-055093 A (RISO KAGAKU CORP) 08 April 2021 (2021-04-08) claims, paragraphs [0006]-[0008], [0044]-[0048], [0056], [0093]-[0096], [0117], [0124], [0126], examples | 1-9 |
| X | WO 2017/168817 A1 (DNP FINE CHEMICALS CO LTD) 05 October 2017 (2017-10 05) claims, paragraphs [0004]-[0005], [0071], [0087]-[0089], [0105], examples | 1-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 July 2021 (06.07.2021) | 13 July 2021 (13.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/015742

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-046035 A (CANON INC) 10 March 2011 (2011-03-10) entire text | 1-9 |
| Y | JP 2015-124342 A (TOYO INK SC HOLDINGS CO LTD) 06 July 2015 (2015-07-06) entire text | 1-9 |
| Y | JP 2009-262549 A (SEIKO EPSON CORP) 12 November 2009 (2009-11-12) entire text | 1-9 |
| A | JP 2001-526995 A (E.I. DU PONT DE NEMOURS AND COMPANY) 25 December 2001 (2001-12-25) entire text | 1-9 |

Form PCT/ISA/210 (continuation of second sheet) (January 2015)

**INTERNATIONAL SEARCH REPORT**
Information on patent family members

International application No.
PCT/JP2021/015742

| Patent Documents referred in the Report | Publication Date | Patent Family | Publication Date |
|---|---|---|---|
| JP 2013-144437 A | 25 Jul. 2013 | US 2013/0147889 A1 claims, paragraphs [0008], [0032], [0037]-[0047], [0055], [0065], examples | |
| JP 2021-055093 A | 08 Apr. 2021 | (Family: none) | |
| WO 2017/168817 A1 | 05 Oct. 2017 | US 2019/0292395 A1 claims, paragraphs [0010]-[0012], [0178], [0210]-[0220], [0262], examples<br>EP 3461865 A1<br>CN 109312179 A | |
| JP 2011-046035 A | 10 Mar. 2011 | (Family: none) | |
| JP 2015-124342 A | 06 Jul. 2015 | (Family: none) | |
| JP 2009-262549 A | 12 Nov. 2009 | US 2009/0258203 A1 entire text | |
| JP 2001-526995 A | 25 Dec. 2001 | WO 1999/033669 A1 entire text<br>EP 1044112 A1<br>CN 1285786 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018165029 A
- JP S5774193 A
- JP S5787988 A
- JP S62261476 A
- JP S5774192 A
- JP S5787989 A
- JP S6072785 A
- JP S61146591 A
- JP H0195091 A
- JP H0313376 A
- JP S5942993 A
- JP S5952689 A
- JP S62280069 A
- JP S61242871 A
- JP H04219266 A
- US 2681294 A
- JP 2015074161 A
- JP 2017177578 A